(19) Europäisches Patentamt
European Patent Office
Office européen des brevets

(11) Veröffentlichungsnummer: **0 013 417**
**B1**

(12) # EUROPÄISCHE PATENTSCHRIFT

(45) Veröffentlichungstag der Patentschrift: **18.08.82**

(51) Int. Cl.³: **C 01 B 33/28** // C11D3/12

(21) Anmeldenummer: **79105345.7**

(22) Anmeldetag: **21.12.79**

(54) **Verfahren zur Herstellung feinstteiliger kristalliner, wasserunlöslicher Natriumaluminiumsilikate.**

(30) Priorität: **27.12.78 DE 2856278**

(43) Veröffentlichungstag der Anmeldung: **23.07.80 Patentblatt 80/15**

(45) Bekanntmachung des Hinweises auf die Patenterteilung: **18.08.82 Patentblatt 82/33**

(84) Benannte Vertragsstaaten: **BE CH DE FR GB IT LU NL SE**

(73) Patentinhaber: **Henkel Kommanditgesellschaft auf Aktien, Postfach 1100 Henkelstrasse 67, D-4000 Düsseldorf 1 (DE)**
Patentinhaber: **Degussa Aktiengesellschaft, Weissfrauenstrasse 9, D-6000 Frankfurt am Main 1 (DE)**

(72) Erfinder: **Stein, Werner, Dr., Ginsterweg 10, D-4000 Düsseldorf 12 (DE)**
Erfinder: **Christophliemk, Peter, Dr., Kärntner Weg 44 a, D-4000 Düsseldorf 13 (DE)**

(56) Entgegenhaltungen:

**DE-A-1 542 636**
**DE-A-1 667 620**
**DE-A-1 717 158**
**DE-A-2 028 163**
**DE-A-2 305 993**
**DE-A1-2 333 068**
**DE-A1-2 419 148**
**DE-A1-2 514 399**
**DE-A1-2 605 083**
**DE-A1-2 651 445**
**DE-A1-2 651 485**
**DE-A1-2 824 342**
**DE-A1-2 903 058**
**DE-B-1 038 015**
**DE-B2-2 326 440**
**DE-B2-2 447 021**

(56) Entgegenhaltungen:

**DE-C-1 038 017**
**US-A-4 016 097**
**US-A-4 126 579**

**CHEMIE-INGENIEUR-TECHNIK, Band 25, Nr. 10, 1953, Weinheim**
**E. TURCK «Die Zweistoffdüse in der Zerstäubungstrocknung»**

**MANUFACTURING CHEMIST & AEROSOL NEWS Band 49, Nr. 10, 1978, London**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 013 417 B1

# Verfahren zur Herstellung feinstteiliger, kristalliner, wasserunlöslicher Natriumaluminiumsilikate

Gegenstand der Erfindung ist ein Verfahren zur kontinuierlichen Herstellung feinstteiliger, kristalliner, wasserunlöslicher, noch gebundenes Wasser enthaltender Natriumaluminiumsilikate, die Anteile mit einer Korngrösse über 25 µm von weniger als 0,1 Gewichtsprozent aufweisen, durch Vermischen von wassergelöstem Natriumaluminat mit wassergelöstem Natriumsilikat in Gegenwart von überschüssigem Natriumhydroxid.

Alkalialuminiumsilikate werden in der üblichen Oxid-Schreibweise durch die allgemeine empirische Formel

$$x\ Kat_{2/n}O\ .\ Al_2O_3\ .\ y\ SiO_2\ .\ z\ H_2O$$

gekennzeichnet. In dieser Oxidformel ist Kat ein mit anderen Kationen austauschbares Kation der Wertigkeit n, x eine Zahl von 0,2 bis 1,5 und vorzugsweise annähernd 1, y eine Zahl grösser 1,5. Der Wassergehalt ist vom Trocknungsgrad abhängig. Die obige Formel umfasst eine Vielzahl von Substanzen, die sich in ihrer chemischen Zusammensetzung zwar oft nur geringfügig, bezüglich ihrer Struktur und Eigenschaften jedoch erheblich unterscheiden. Zur Identifizierung wird neben der chemischen Zusammensetzung bei kristallinen Typen im allgemeinen das Röntgenbeugungsdiagramm herangezogen.

Technisch interessant sind vor allem solche synthetischen Alkalialuminiumsilikate, die ein dreidimensional vernetztes Aluminiumsilikat-Gitter aufweisen. In einem anionischen Gerüst ist gegenüber $SiO_2$ formal ein Teil der Silicium-(IV)-Atome durch Aluminium (III)-Atome ersetzt; die fehlende Ladung wird durch Kationen — je ein einwertiges Kation pro Aluminium-Atom im Gitter — ausgeglichen. Die sogenannten Zeolithe bilden dabei eine Mineralklasse kristallwasserhaltiger Alkalialuminiumsilikate mit definierter Poren- und Hohlraumstruktur ihres Aluminiumsilikat-Gitters. «Molekularsiebe» sind nur solche Zeolithe, die aufgrund dieser Gittereigenschaften technisch für Stofftrennungen eingesetzt werden. Synthetische Zeolithe sind von zunehmender technischer Bedeutung und werden als Kationenaustauscher vor allem zum Enthärten von Wasser, als Katalysatoren bei chemischen Prozessen, als Trocken-, Trenn- beziehungsweise Sorptionsmittel für Lösungsmittel und Gase und als heterogene anorganische Builder in Wasch- und Reinigungsmitteln eingesetzt. Je nach Anwendungszweck sind unterschiedliche Typen, Trocken- und Reinheitsgrade erforderlich. Üblicherweise werden solche Molekularsiebe zunächst in ihrer Natriumform hergestellt und anschliessend durch Kationenaustausch in andere Formen umgewandelt. Bei den technisch bedeutsamen Molekularsiebtypen A und X, die in der Literatur auch noch abweichend bezeichnet werden, verwendet man beispielsweise die Bezeichnungen NaA beziehungsweise NaX für die Natriumformen und die Bezeichnungen KA beziehungsweise KX für die Kaliumformen.

Von besonderer technischer Bedeutung sind die beiden Molekularsiebtypen NaA und NaX. Die chemische Zusammensetzung des Molekularsiebs des Typs NaA entspricht der Summenformel

$$1 \pm 0{,}2\ Na_2O\ .\ 1\ Al_2O_3\ .\ 2 \pm 0{,}5\ SiO_2\ .$$
$$0\ bis\ 6\ H_2O,$$

die des silikatreicheren Molekularsiebs NaX der Formel

$$0{,}9 \pm 0{,}2\ Na_2O\ .\ 1\ Al_2O_3\ .\ 2{,}5 \pm 0{,}5\ SiO_2\ .$$
$$0\ bis\ 8\ H_2O.$$

Das Röntgenbeugungsdiagramm von Molekularsieb NaA ist beispielsweise in den DE-B-10 38 015 und DE-B-10 38 017, das von Molekularsieb NaX in DE-B-10 38 016 beschrieben.

Ein weiteres zeolithisches Natriumaluminiumsilikat mit zunehmender technischer Bedeutung ist das silikatreichere kubische Molekularsieb P, das auch als «Zeolith $P_c$» oder «Molekularsieb B» bezeichnet wird. Die chemische Zusammensetzung von Molekularsieb P entspricht der Summenformel

$$0{,}9 \pm 0{,}2\ Na_2O\ .\ 1\ Al_2O_3\ .\ 4 \pm 1{,}3\ SiO_2\ .$$
$$0\ bis\ 6\ H_2O.$$

Das Röntgenbeugungsdiagramm ist beispielsweise bei D.W. Breck, «Zeolite Molecular Sieves», New York 1974, Seite 365, aufgeführt.

Ebenso ist dort (Seite 360) das Röntgendiffraktogramm des Hydrosodaliths («Zeolith HS») aufgeführt. Dieses Natriumaluminiumsilikat weist zwar ebenfalls Gerüststruktur und eine chemische Zusammensetzung ähnlich dem Typ NaA auf; es wird jedoch üblicherweise nicht zu den Zeolithen gerechnet, da keine entsprechende Porenstruktur vorliegt. Da der Hydrosodalith ein geringeres Kationenaustauschvermögen aufweist, ist er bei vielen Molekularsieb-Synthesen ein unerwünschtes Nebenprodukt.

Diese und andere Natriumaluminiumsilikate verschiedenen Typs werden technisch überwiegend in der Weise hergestellt, dass die bevorzugt unter Verwendung von Natriumhydroxidüberschuss voll gelösten Aluminat- und Silikat-Komponenten unter Einhaltung bestimmter Mol- und Konzentrationsverhältnisse im Ansatz oberhalb Raumtemperatur unter starkem Rühren vereinigt, gründlich vermischt, das zunächst entstehende Gel durch Zuführung starker Scherkräfte zu einem rührfähigen Sol zerschlagen und die resultierenden röntgenamorphen Natriumaluminiumsilikat-Niederschläge nachfolgend unter Einhaltung definierter Kristallisationsbedingungen kristallisiert werden; je nach Verwendungszweck werden diese Natriumaluminiumsilikate filtriert, von überschüssigem Alkali befreit und getrocknet. Verschiedene Ausführungsformen dieser hydrothermalen Synthese werden bei D.W. Breck (siehe oben) aufgeführt, weitere sind beispielsweise in den DE-A-16 67 620, 20 28 163, 22 00 745, 23 05 993, 23 33 068, 25 14 399, 26 05 083 und 26 05 113 beschrieben. Beispiel zur Herstellung röntgenamorpher Natriumaluminiumsilikate für spezielle Anwendungszwecke finden sich in den DE-A-17 17 158 und 25 49 659.

Für die meisten Anwendungszwecke, insbesondere in wässriger Aufschlämmung, ist die Teilchengrössenverteilung des eingesetzten Natriumaluminiumsilikat-Pulvers von grosser Bedeutung, beispielsweise für die Sorptions- und Austauscheigenschaften, Sedimentationsgeschwindigkeit, Abrasivität sowie Rückstandsverhalten gegenüber glatten Oberflächen oder Textilien. Ganz überwiegend sind dabei möglichst kleine Pulverteilchen erwünscht. Darüber hinaus ist es beispielsweise für den Einsatz in Wasch-, Spül- und Reinigungsmitteln erforderlich, dass die Pulver keinen messbaren Anteil an Teilchen über 25 µm aufweisen. Man bezeichnet diesen Anteil, der nach DIN 53 580 durch nasse Siebung nach MOCKER ermittelt wird, als Grit.

Aus der Literatur sind bisher nur wenige zahlenmässige Angaben über die Korngrössenverteilung von Natriumaluminiumsilikaten bekannt; überwiegend betreffen sie das technisch wichtige Molekularsieb NaA. Eine charakteristische Verteilungskurve für Typ NaA (= «4A») findet sich bei D.W. Breck, «Zeolite Molecular Sieves», New York 1974, Seite 388. Der Hauptanteil der Teilchen liegt danach unterhalb 4 µm. Wesentlich grössere Kristallteilchen als die einander ähnlichen Molekularsiebtypen NaA und NaX weist dagegen Molekularsieb P mit Teilchengrössen von üblicherweise oberhalb 5 µm auf (siehe A.M. Taylor und R. Roy, The American Mineralogist, Band 49, 1964, Seite 662). Diese Teilchengrössen wurden jedoch elektronenmikroskopisch ermittelt.

Aufschlämmungen getrockneter pulverförmiger Natriumaluminiumsilikate können jedoch wesentlich grössere Teilchen aufweisen. Gängige Methoden zur Bestimmung der Teilchengrössenverteilung beruhen entweder auf der unterschiedlichen Sedimentation unterschiedlich grosser Teilchen (Sedimentationsanalyse) oder der elektronischen Volumenmessung der in einem Prüfelektrolyten suspendierten Teilchen mittels der Störung eines elektrischen Feldes in der Zählöffnung (Zählung mittels Coulter-Counter).

Verfahren zur Herstellung gritfreier, feinteiliger Zeolithpulver des Typs A mit definierten Teilchengrössenspektren und Teilchenanteilen von 50 Gewichtsprozent kleiner 4,9 µm (beziehungsweise 6,2 µm, 4,3 µm, 5,9 µm und 4,0 µm) werden in den DE-A-26 51 419, 26 51 420, 26 51 436, 26 51 437 beziehungsweise 26 51 485 beschrieben. In der DE-A-25 14 399 wird die Herstellung eines gritarmen zeolithischen Molekularsiebpulvers mit einem mittleren Korndurchmesser unterhalb 10 µm gemessen mittels Sedimentationsanalyse beschrieben, wobei man das das Kristallisationsprodukt umgebende wässrige Medium vor der Trocknung auf einen pH-Wert zwischen 8,5 und 11 einstellt.

Demgegenüber ist es die Aufgabe der vorliegenden Erfindung, ein Verfahren zur Herstellung noch feinteiligerer, gritfreier, bevorzugt zeolithischer kationenaustauschender Natriumaluminiumsilikate — vorzugsweise vom Typ NaA, NaX und P — zu entwickeln, das einen kontinuierlichen Verfahrensablauf mit einer hohen Raum/Zeit-Ausbeute auch ohne die Anwendung starker Scherkräfte ermöglicht.

Gegenstand der Erfindung ist demnach ein Verfahren zur kontinuierlichen Herstellung feinstteiliger, wasserunlöslicher, kristalliner, noch gebundenes Wasser enthaltender Natriumaluminiumsilikate der allgemeinen Formel:

$$x\,Na_2O\,.\,Al_2O_3\,.\,y\,SiO_2,$$

in der x eine Zahl von 0,2 bis 1,5 und y eine Zahl von 1,5 bis 10 bedeuten, die Anteile mit einer Korngrösse über 25 µm von weniger als 0,1 Gewichtsprozent aufweisen, durch Vermischen von wassergelöstem Natriumaluminat mit wassergelöstem Natriumsilikat in Gegenwart von überschüssigem Natriumhydroxid, wobei eine Aluminatlösung mit der Zusammensetzung entsprechend den Molverhältnissen:

$$1\ Al_2O_3 : 1 \text{ bis } 10\ Na_2O : 20 \text{ bis } 200\ H_2O$$

sowie eine Silikatlösung mit der Zusammensetzung entsprechend den Molverhältnissen:

$Na_2O : SiO_2$ von 0,1 bis 10 und
$H_2O : SiO_2$ von 5 bis 200

in einem Gewichtsverhältnis entsprechend der Gesamtzusammensetzung bezüglich der Molverhältnisse von

$$1{,}5 \text{ bis } 15\ Na_2O : 1\ Al_2O_3 : 1 \text{ bis } 15\ SiO_2 : 50 \text{ bis } 400\ H_2O$$

umgesetzt wird, dadurch gekennzeichnet, dass die Vermischung durch Versprühung bei einer Temperatur im Bereich von 0 bis 103°C, unter Verwendung eines Düsensystems mit mindestens zwei Flüssigkeitskanälen, in dem Aluminat- und die Silikatlösung getrennt der Düsenaustrittsöffnung zugeführt werden, in einer solchen Weise erfolgt, dass die beiden Lösungen erst nach Verlassen der Düsenaustrittsöffnung aufeinandertreffen und noch im Sprühstrahl unter Bildung eines röntgenamorphen Natriumaluminiumsilikat-Gels miteinander reagieren und dass anschliessend das erhaltene Gel vor der Filtration gegebenenfalls unter Rühren auf eine Temperatur im Bereich von 20 bis 150°C erwärmt und bei dieser Temperatur kristallisiert wird.

Bei dem erfindungsgemässen Verfahren werden die unter Verwendung von Natriumhydroxidüberschuss voll gelösten Aluminat- und Silikat-Komponenten unter Einhaltung bestimmter Mol- und Konzentrationsverhältnisse im Ansatz durch gemeinsames Versprühen über ein geeignetes Sprühaggregat zu möglichst kleinen Tröpfchen gründlich vermischt und das so ausgefällte Natriumaluminiumsilikat von der alkalischen Mutterlauge abfiltriert, gegebenenfalls weitgehend alkalifrei gewaschen und nach Bedarf getrocknet.

Die Versprühung tropfbarer Flüssigkeiten, Lösungen oder Suspensionen ist weit verbreitet, beispielsweise zur Trocknung («Zerstäubungstrocknung»), Granulierung, Kühlung oder Absorption. Bekannt ist auch die Verwendung von Sprühaggregaten bei Neutralisationsreaktionen vor allem zur raschen Abführung hoher Neutralisationswärmen (vergleiche hierzu DE-B-23 26 440). Völlig unbekannt war es jedoch bisher, gemäss dem erfindungsgemässen Verfahren zwei hochalkalische Lösungen, deren Vermischung oberhalb Raumtemperatur praktisch augenblicklich zu einem gelartigen Niederschlag führt, durch gemeinsames Versprühen über ein geeignetes Sprühaggregat derart gründlich zu vermischen, dass keine weiteren Mischungsoperationen mehr erforderlich sind. Bei der Herstellung von Natriumaluminiumsilikat nach dem erfindungsgemässen Sprühverfahren ist insbesondere bemerkenswert, dass das nach der Versprühung anfallende röntgenamorphe Natriumaluminiumsilikat-Gel nicht erst noch durch Zuführung starker Scherkräfte zerschlagen werden muss, um den Übergang in ein kristallisationsfähiges Sol einzuleiten. Durch das erfindungsgemässe Sprühverfahren sind wesentlich feinteiligere Natriumaluminiumsilikat-Pulver erhältlich als durch die bisher üblichen Fällungsverfahren selbst bei Zuführung hoher Scherenergien.

Das Versprühen (= «Zerstäuben») von Flüssigkeiten, Lösungen oder Suspensionen ist ein Zerkleinerungsvorgang, der hohe Relativgeschwindigkeiten zwischen Gas und Flüssigkeit verlangt. Erst wenn die Durckschwankungen des turbulenten Strömungsfeldes die Grenzflächenspannung der Flüssigkeit überwinden, kann die Flüssigkeitsoberfläche aufreissen und eine Versprühung eintreten. Dabei ist es im Prinzip gleichgültig, ob der Flüssigkeit oder dem Gas eine Strömungsgeschwindigkeit erteilt wird. Dichte, Grenzflächenspannung, Zähigkeit und Strahldicke der Flüssigkeit sowie erzwungene Relativgeschwindigkeiten beeinflussen die Tropfengrösse und deren statistische Verteilung. Formelmässige Beschreibungen der dabei auftretenden physikalischen Vorgänge sind beispielsweise den Monographien «Sprühturmtechnik» von M. Schubert und H. Vieweg, VEB Verlag für Grundstoffindustrie, Leipzig (1969), und «Particulate Technology» von C. Orr, Jr., The Macmillan Comp., New York (1966) (Chapter 1) sowie der dort zitierten Literatur zu entnehmen.

Im Hinblick auf die sehr unterschiedlichen Produkte und Anwendungszwecke sind in der chemischen Industrie eine ganze Reihe verschiedener Sprühaggregate bekannt. Beschreibungen dieser Typen finden sich ausser in Lehrbüchern der Technischen Chemie und den oben angeführten Monographien beispielsweise bei E. Turk, Chemie-Ing.-Technik 25, 620-622 (1953); H. A. Troesch, ebenda 26, 311-320 (1954); M. Schubert und H. Vieweg, Chem. Technik 17, 198-205 (1965); Ullmanns Enzyklopädie der technischen Chemie, 4. Auflage, Band 2, Seite 254-258, Verlag Chemie, Weinheim/Bergstrasse (1972) sowie Kirk-Othmer, Encyclopedia of Chemical Technology, 2. Auflage, Band 18, Seite 639-652, J. Wiley & Sons (1969).

Prinzipiell zu unterscheiden sind danach Druckdüsen, die lediglich durch Flüssigkeitsdruck zerstäuben («Einstoffdüsen»), Rotationszerstäuber, die das Gut durch Fliehkraft zerstäuben und Zweistoffdüsen, in denen das Gut mit Hilfe von Treibmitteln (Wasserdampf, Gas, insbesondere jedoch Druckluft) zerstäubt wird. Mehrstoffdüsen sind vom Arbeitsprinzip her den Zweistoffdüsen zuzuordnen. Diese unterschiedlichen Aggregate, die zudem noch in voneinander abweichender Bauweise eingesetzt werden, weisen spezifische Vor- und Nachteile auf, insbesondere im Hinblick auf das erfindungsgemässe Verfahren.

Wird für das erfindungsgemässe Sprühverfahren nur ein Sprühaggregat mit nur einem Flüssigkeitskanal verwendet, so ist sowohl bei den Druckdüsen, Rotationszerstäubern als auch Zweistoffdüsen gängiger Bauart (ein Flüssigkeitskanal, ein Druckgaskanal) zur Erzielung homogener Gele eine Vermischung der Silikat- und Aluminat-Komponente bereits vor Eintritt in das Sprühaggregat erforderlich; am Düsenmund wird dann also ein bereits vermischtes Alkalialuminiumsilikat versprüht. Bei reinen Natriumaluminiumsilikaten bereitet diese Vorgehensweise apparative Schwierigkeiten, da sich bei Vereinigung der Natriumaluminat- und Natriumsilikatlösungen schon bei Raumtemperatur im gesamten technisch gängigen Bereich nahezu augenblicklich starke Niederschläge bilden. Um diese gelartigen Niederschläge durch das Sprühaggregat zu drücken, sind hohe Pumpdrücke erforderlich. Selbst bei unwirtschaftlich verdünnten Ansätzen mit Molverhältnissen $H_2O : Al_2O_3 > 250$ im Gesamtfällungsansatz und Pumpdrükken von 4 bar sind bei Düsensystemen mit nur einem Flüssigkeitskanal Verstopfungen nicht zu vermeiden.

Aus diesem Grunde ist es zur Durchführung des erfindungsgemässen Verfahrens unerlässlich, die Aluminat- sowie die Silikatlösung in voneinander getrennten Flüssigkeitskanälen der Düsenaustrittsöffnung zuzuführen und so miteinander zu versprühen, dass die beiden Lösungen erst nach Verlassen der Düsenaustrittsöffnung aufeinandertreffen und miteinander reagieren.

Hierbei hat es sich als zweckmässig erwiesen, die beiden Lösungen unter Zuhilfenahme eines inerten Druck- oder Treibgases, das vorzugsweise einen Druck im Bereich von 0,3 bis 3 bar aufweist, miteinander zu versprühen. Vorteilhafter verwendet man als Druck- oder Treibgas Druckluft, die gegebenenfalls auch vorgeheizt sein kann.

Das erfindungsgemässe Verfahren lässt sich beispielsweise unter Verwendung von zwei Sprühaggregaten mit je einem Flüssigkeitskanal — und gegebenenfalls je einem Druckgaskanal — durchführen. Die Aluminat- und die Silikatkomponente werden dabei getrennt mit je einem Sprühaggregat dergestalt versprüht, dass sich die Sprühkegel überlappen.

Wesentlich weniger störanfällig und daher erfindungsgemäss bevorzugt sind sogenannte Dreistoffdüsen mit zwei Flüssigkeitskanälen und mindestens einem Druckgaskanal, bei denen die Aluminatlösung, die Silikatlösung und das Treibgas getrennt der Düse zugeführt werden und erst nach Verlassen der Düsenaustrittsöffnung aufeinandertreffen. Verstopfungen innerhalb der Rohrleitungen durch Natriumaluminiumsilikat-Niederschläge sind hierbei nicht zu befürchten. Derartige Dreistoffdüsen sind marktgängig erhältlich.

Zur Konstruktion und Verwendung einer solchen Mehrstoffdüse lassen sich aus der oben genannten Literatur die folgenden allgemeinen Aussagen machen:

a) Im Verdüsungsbereich muss eine möglichst kleine Geschwindigkeit des Flüssigkeitsstrahls und eine möglichst grosse Geschwindigkeit des Gasstrahls eingestellt werden.

b) Der Öffnungsquerschnitt für den Flüssigkeitskanal ist daher möglichst gross zu wählen.

c) Überwiegend werden nur sehr kleine Tröpfchen mit weniger als 50 µm Durchmesser erzeugt; mit steigendem Gas-Flüssigkeitsverhältnis sinkt die mittlere Tröpfchengrösse.

d) Mit Verringerung der mittleren Tropfengrösse verengt sich das sonst relativ breite Tropfenspektrum.

Mehrstoffdüsen sind zwar relativ energieaufwendige Sprüheinrichtungen, erzeugen jedoch die feinsten Teilchen, besitzen den geringsten Materialverschleiss und neigen wegen der grossen Bohrungsquerschnitte am wenigsten zu Verstopfungen. Technisch bevorzugt sind die sogenannten Aussensprühdüsen, bei denen das Treibgas erst ausserhalb der Sprüheinrichtung auf den Flüssigkeitsstrahl auftrifft. Zu erwähnen sind auch die Kombinationen zwischen Innensprühdüse und Aussensprühdüse (Kirschbaum-Düse), die den geringsten Gasdruck (0,2 bis 0,4 bar) erfordern, das relativ engste Tröpfchenspektrum erzeugen und den Verschleiss gegenüber einer reinen Innensprühdüse merklich senken. Bei den reinen Aussensprühdüsen unterscheidet man zwischen geradliniger und rotierender Gasführung. Die geradlinige Gasführung erzeugt einen engen Sprühkegel und die Beschleunigung der Teilchen durch das Gas hält mehrere Meter an. Ausserdem herrscht in den Flüssigkeitskanälen leichter Überdruck. Bei den sogenannten Druckluftspiraldüsen herrscht dagegen allgemein ein Unterdruck im Düsenrohr.

Der Gasdruckbereich ist bei den Druckluftdüsen sehr weit (0,3 bis etwa 7 bar); die Gasaustrittsgeschwindigkeit beträgt dabei meist 100 bis etwa 250 Meter pro Sekunde. Die Gewichtsmenge der zum Versprühen benötigten Druckluft ist allgemein von etwa gleicher Grössenordnung wie die der zu verdüsenden Flüssigkeit.

Eine Dreistoffdüsenvariante, die auch für das erfindungsgemässe Verfahren geeignet ist, wird in der DE-A-24 19 148 beschrieben. Eine Wasserspritzdüse, die aus naher Entfernung auf die Mündung der Dreistoffdüse — mit Druckgaskanal und zwei Ringkanälen für Flüssigkeiten — gerichtet ist, beseitigt störende Aufwachsungen («Bärte») am Düsenmund.

Die Leistung von Zweistoff- beziehungsweise Mehrstoffdüsen ist begrenzt; im Regelfall lassen sich nicht mehr als etwa 100 l Flüssigkeit pro Stunde zerstäuben. Höhere Durchsatzmengen lassen sich jedoch leicht durch eine Erhöhung der Düsenanzahl erreichen. Das Auswechseln einer Düse im laufenden Betrieb verursacht erfahrungsgemäss nur einen geringen Produktionsrückgang für wenige Minuten.

Für die erfindungsgemässe Sprühfällung von Natriumaluminiumsilikat ist eine Apparatur bestehend aus zwei Vorlagebehältern für die Aluminat- und die Silikatlösung, zwei Pumpen und Dosiereinrichtungen für die beiden Lösungen, einem Sprühaggregat und einem Fällbehälter erforderlich. Die produktumspülten Teile sollten aus Edelstahl gefertigt sein. Die Vorlagebehälter sind zweckmässigerweise mit Heizvorrichtung — Heizmantel oder Heizschlange für Beheizung mit Wasserdampf — ausgestattet; gegebenenfalls ist auch ein direktes Einblasen von Wasserdampf möglich, wobei jedoch dann bei Festlegung der Ansatzverhältnisse das einkondensierte Wasser berücksichtigt werden muss. Um die Vorlagebehälter auch zur Herstellung der Aluminat- und Silikatlösungen verwenden zu können, ist vor allem beim Aluminat-Behälter der Einbau eines wirksamen Rührers erforderlich. Die beiden flüssigen Komponenten werden mittels geeigneter alkalistabiler Pumpen dem Sprühaggregat zugeführt. Die Dosierung kann dabei je nach verwendetem Pumpentyp entweder direkt über die Pumpeneinstellung oder über Ventile, die beispielsweise mittels Schwebekörper-Durchfluss-Messgeräte gesteuert werden, erfolgen.

Aus den vorstehend genannten Gründen wird als Sprühaggregat für das erfindungsgemässe Verfahren vorzugsweise eine Dreistoffdüse mit zwei Kanälen für Flüssigkeiten und einem Druckluftkanal für Aussenversprühung verwendet. Die über eine Filterpatrone und Reduzierstation zugeführte Druckluft sollte im Bereich von 0,3 bis

3 bar regulierbar sein; auf eine Vorrichtung zur Aufheizung der Druckluft kann im Regelfall verzichtet werden, da die Temperatur am Düsenkopf einfacher über die Temperatur der Flüssigkomponenten eingestellt werden kann. Bei grossen Mengendurchsätzen können mehrere solcher Düsen auf einem Sprühkranz angeordnet sein, wobei zur Ermöglichung eines raschen Austauschs einer gegebenenfalls verstopften oder defekten Düse ohne Unterbrechung der kontinuierlichen Versprühung die Düsen einzeln abschaltbar sein sollten.

Der eigentliche Fällbehälter kann wie ein Sprühturm nach dem Stand der Technik ausgestattet sein; vor allem bei grösseren Mengendurchsätzen kann dann auf zusätzliche Beheizung verzichtet werden. Im Gegensatz zur technischen Sprühtrocknung enthält die Abluft kaum feste Bestandteile, sondern praktisch nur Wasserdampf, so dass nur Kühlaggregate und keine aufwendigen Zyklone erforderlich sind. Um das versprühte Gel durch schwaches Rühren flüssig halten zu können, sollte der Sprühbehälter mit einem Rührer ausgestattet sein.

Sowohl bei den Fällungsverfahren nach dem Stand der Technik als auch bei dem erfindungsgemässen Sprühverfahren fällt zunächst ein Natriumaluminiumsilikat-Gel aus. Die so erhaltenen Gele unterscheiden sich jedoch erheblich voneinander, sowohl im Hinblick auf resultierende Produkteigenschaften als auch auf die Prozessführung; das versprühte Gel bleibt nämlich fliessfähig auch bei nur sehr schwachem Rühren. Dieser erniedrigte Aggregationsgrad beziehungsweise weniger starke Zusammenhalt des versprühten Gels ist ganz offensichtlich darauf zurückzuführen, dass sich die Sprühteilchen nicht mehr zu einem zusammenhängenden Gel vereinigen. Eine derartige Auswirkung der Versprühung ist durchaus unerwartet. Der erniedrigte Aggregationsgrad des Gels führt zu kleineren Teilchen und insbesondere zu dem anwendungstechnisch bedeutsamen Fehlen von Grit.

Die Kristallisation des röntgenamorphen Gels wird in Abhängigkeit vom Mengendurchfluss zweckmässigerweise in getrennten Kristallisationsbehältern durchgeführt, vor allem bei kontinuierlicher Fahrweise, wie sie die erfindungsgemässe Versprühung in einfacher Weise erlaubt. Auch der Kristallisationsbehälter sollte mit einem Rührer ausgestattet sein, da bei verschiedenen zeolithischen Natriumaluminiumsilikat-Typen (zum Beispiel NaA) schwaches Rühren während der Kristallisation positive Auswirkungen auf die Produktqualität (einheitlichere Zusammensetzung, höhere Kristallinität) zeigt. Die Einstellung der Kristallisationstemperatur kann sowohl über Mantelbeheizung als auch durch direktes Einblasen von Wasserdampf in Abhängigkeit vom angestrebten Produkt-Typ, beispielsweise NaA, NaX oder P, erfolgen.

Auch die optimale Dauer der Kristallisationszeit ist vom angestrebten Produkttyp abhängig. Vorteilhafterweise wird die Kristallisation in dem Zeitpunkt unterbrochen, in dem das angestrebte Produkt sein maximales Calciumbindevermögen erreicht hat. Zur Bestimmung des Calciumbindevermögens können die in der Literatur angegebenen Methoden Verwendung finden, beispielsweise das in der DE-A-24 12 837 beschriebene Verfahren. Aus dem erniedrigten Aggregationszustand des primär gebildeten Gels resultiert eine starke Verkürzung der zur vollständigen Kristallisation erforderlichen Dauer der hydrothermalen Behandlung. Aus der gesamten Literatur über Molekularsiebsynthesen lassen sich keine vergleichbar kurzen Kristallisationszeiten entnehmen.

Das kristallisierte Produkt wird filtriert sowie je nach Bedarf alkalifrei gewaschen und getrocknet. Das stark alkalihaltige Filtrat kann gewünschtenfalls zusammen mit (eingeengten) Waschwässern zur Herstellung der Ausgangskomponenten wiederverwendet werden. Je nach angestrebtem Verwendungszweck lässt sich gegebenenfalls auch eine Suspension der kristallisierten Natriumaluminiumsilikate direkt verwerden, beispielsweise zur Herstellung von Wasch- und Reinigungsmitteln.

Vorteilhafterweise wird bei dem erfindungsgemässen Verfahren das Molverhältnis von $Al_2O_3$ zu $SiO_2$ in den beiden zu versprühenden Lösungen so eingestellt, dass es der Zusammensetzung des gewünschten Natriumaluminiumsilikates entspricht. Auf diese Weise ist es möglich — bei geeigneter Wahl der Reaktions- und Kristallisationsbedingungen — kristalline Natriumaluminiumsilikate vom Typ NaA, NaX und P mit einer bestimmten mittleren Teilchengrösse herzustellen.

Eine besondere Ausführungsform des erfindungsgemässen Verfahrens betrifft die Herstellung eines kristallinen Natriumaluminiumsilikates vom Typ NaA mit einer mittleren Teilchengrösse kleiner als 3 µm. Diese besondere Ausführungsform ist dadurch gekennzeichnet, dass eine Aluminatlösung mit der Zusammensetzung entsprechend den Molverhältnissen

$$1\ Al_2O_3 : 1 \text{ bis } 4\ Na_2O : 20 \text{ bis } 200\ H_2O$$

sowie eine Silikatlösung mit der Zusammensetzung entsprechend den Molverhältnissen

$Na_2O : SiO_2$ von 0,1 bis 3 und
$H_2O : SiO_2$ von 5 bis 50

in einem Gewichtsverhältnis entsprechend der Gesamtzusammensetzung bezüglich der Molverhältnisse von

$$1{,}8 \text{ bis } 6\ Na_2O : 1\ Al_2O_3 : 1 \text{ bis } 2{,}4\ SiO_2 : 50 \text{ bis } 300\ H_2O$$

miteinander versprüht werden und die Kristallisation für mindestens 10 Minuten bei einer Temperatur im Bereich von 70 bis 95°C unter Rühren erfolgt.

Vorzugsweise wird bei dieser besonderen

Ausführungsform des erfindungsgemässen Verfahrens die Gesamtzusammensetzung der beiden zu versprühenden Lösungen so eingestellt, dass sie Molverhältnissen von

3 bis 4 $Na_2O$ : 1 $Al_2O_3$ : 1,8 bis 2 $SiO_2$ : 80 bis 100 $H_2O$

entspricht. Ferner ist es hierbei von Vorteil, die beiden zu versprühenden Lösungen sowie gegebenenfalls auch das Druckgas so zu erwärmen, dass im Sprühstrahl Temperaturen im Bereich von 60 bis 80°C resultieren.

Eine weitere besondere Ausführungsform des erfindungsgemässen Verfahrens betrifft die Herstellung eines kristallinen Natriumaluminiumsilikates vom Typ NaX mit einer mittleren Teilchengrösse kleiner als 2 µm. Diese besondere Ausführungsform ist dadurch gekennzeichnet, dass eine Aluminatlösung mit der Zusammensetzung entsprechend den Molverhältnissen

1 $Al_2O_3$ : 1 bis 5 $Na_2O$ : 20 bis 200 $H_2O$

sowie eine Silikatlösung mit der Zusammensetzung entsprechend den Molverhältnissen

$Na_2O$ : $SiO_2$ von 0,1 bis 3 und
$H_2O$ : $SiO_2$ von 5 bis 100

in einem Gewichtsverhältnis entsprechend der Gesamtzusammensetzung bezüglich der Molverhältnisse von

2,5 bis 10 $Na_2O$ : 1 $Al_2O_3$ : 2,5 bis 10 $SiO_2$ : 80 bis 400 $H_2O$

miteinander versprüht werden und die Kristallisation für mindestens eine Stunde bei einer Temperatur im Bereich von 85 bis 105°C erfolgt.

Bei dieser besonderen Ausführungsform stellt man vorzugsweise die Gesamtzusammensetzung der beiden zu versprühenden Lösungen so ein, dass sie Molverhältnissen

$SiO_2$ : $Al_2O_3$ von 2,5 bis 6
$Na_2O$ : $SiO_2$ von 1.2 bis 1,5
$H_2O$ : $SiO_2$ von 35 bis 100

entspricht. Vorteilhafterweise werden hierbei die beiden zu versprühenden Lösungen sowie gegebenenfalls auch das Druckgas so erwärmt, dass im Sprühstrahl Temperaturen im Bereich von 60 bis 95°C resultieren.

Eine dritte besondere Ausführungsform des erfindungsgemässen Verfahrens betrifft die Herstellung eines kristallinen Natriumaluminiumsilikates vom Typ P der kubischen Form mit einer mittleren Teilchengrösse kleiner als 6 µm. Diese besondere Ausführungsform ist dadurch gekennzeichnet, dass eine Aluminatlösung mit der Zusammensetzung entsprechend den Molverhältnissen

1 $Al_2O_3$ : 1 bis 5 $Na_2O$ : 20 bis 200 $H_2O$

sowie eine Silikatlösung mit der Zusammensetzung entsprechend den Molverhältnissen

$Na_2O$ : $SiO_2$ von 0,1 bis 3 und
$H_2O$ : $SiO_2$ von 5 bis 100

in einem Gewichtsverhältnis entsprechend der Gesamtzusammensetzung bezüglich der Molverhältnisse von

1,5 bis 10 $Na_2O$ : 1 $Al_2O_3$ : 3 bis 10 $SiO_2$ : 100 bis 400 $H_2O$

miteinander versprüht werden und die Kristallisation für mindestens eine Stunde bei einer Temperatur im Bereich von 90 bis 105°C erfolgt.

Bevorzugt ist bei dieser besonderen Ausführungsform, dass man die Gesamtzusammensetzung der beiden zu versprühenden Lösungen so einstellt, dass sie einem Molverhältnis

$SiO_2$ : $Na_2O$ von 1 bis 2,5

entspricht. Die beiden zu versprühenden Lösungen sowie gegebenenfalls auch das Druckgas werden hierbei vorteilhafterweise so erwärmt, dass im Sprühstrahl Temperaturen im Bereich von 60 bis 100°C resultieren.

Das erfindungsgemässe und nachstehend durch Beispiele erläuterte Verfahren weist gegenüber dem Stand der Technik insgesamt die folgenden Vorteile auf:

Auf der apparativen Seite ist die Einsparung eines grossen und damit aufwendigen Fällungsaggregats mit Schereinrichtungen zur intensiven Vermischung der Komponenten und Zerschlagung des resultierenden Gels hervorzuheben. Die Versprühung und damit die Fällung ist ohne Schwierigkeiten kontinuierlich auszuführen. Eine solche kontinuierliche Verfahrensweise führt in Verbindung mit der nur geringen Grösse einer Sprühvorrichtung und einer gegenüber Fällungsverfahren relativ kurzen anschliessenden Kristallisationszeit zu einer hohen Raum/Zeit-Ausbeute für die kristallinen Produkte.

Auf der Produktseite liegen besondere Vorteile im Erhalt eines einheitlichen Kornspektrums mit sehr kleinen Teilchen bei zu vernachlässigenden Grit-Anteilen. Das erfindungsgemässe Verfahren ist bei Molekularsiebsynthesen allgemein anwendbar. Insbesondere kann nach dem erfindungsgemässen Verfahren der Molekularsieb-Typ NaA mit einer mittleren Teilchengrösse kleiner als 3 µm, einem Kornanteil grösser als 10 µm von weniger als 3 Volumenprozent und einem Durchmesser der Kristallite von überwiegend unterhalb 1 µm hergestellt werden. Typ NaX lässt sich erfindungsgemäss noch feinteiliger mit einer mittleren Teilchengrösse von unterhalb 2 µm erhalten. Das nach dem Stand der Technik bisher nur in grossen Kristalliten anfallende Molekularsieb P lässt sich erfindungsgemäss mit einem Durchmesser von unterhalb 2 µm, einem mittleren Teilchendurchmesser von unterhalb 6 µm und einem Kornan-

teil grösser als 10 µm von weniger als 5 Volumenprozent herstellen.

Die gewonnenen Natriumaluminiumsilikate — insbesondere die Molekularsiebtypen NaA und NaX — sollen vorzugsweise als heterogene anorganische Builderstoffe (Phosphatersatz) in Wasch-, Spül- und Reinigungsmitteln Verwendung finden, wobei es in anwendungstechnischer Hinsicht von besonderer Bedeutung ist, dass der Anteil an Teilchen mit einer Korngrösse von über 25 µm unterhalb 0,1 Gewichtsprozent liegt.

Der beschriebene Gesamtablauf des erfindungsgemässen Verfahrens zur Herstellung kristalliner Natriumaluminiumsilikate über Sprühfällung ist aus dem Fliessschema gemäss Abbildung 1 ersichtlich. Für die erfindungsgemässe Herstellung von Natriumaluminiumsilikat im Labormassstab kann eine vereinfachte Versuchsanordnung — wie in den Beispielen angegeben — verwendet werden. Die nachstehend angeführten Beispiele zeigen die allgemeine Anwendbarkeit des erfindungsgemässen Verfahrens im Rahmen von Molekularsiebsynthesen und die grössere Feinteiligkeit so erhaltener Produkte gegenüber solchen nach dem bisherigen Stand der Technik.

In der DE-A-17 17 158 wird ein Verfahren zur Herstellung von feinteiligem amorphem Natriumaluminiumsilikat mit einem Molverhältnis von vorwiegend

$$1\ Na_2O : 1\ Al_2O_3 : 3\text{-}3{,}6\ SiO_2$$

beschrieben, bei dem eine Aluminatlösung allmählich einer Silikatlösung unter Einwirkung eines Rührers zugegeben wird. Hierbei führt ein bestimmtes Ansatzverhältnis der Rohstoffe zu der angestrebten Zusammensetzung des Endproduktes.

Ferner betrifft die DE-B2-24 47 021 ein Verfahren zur Herstellung eines kristallinen Zeolithpulvers vom Typ A mit mindestens 99,5 Gew.-% unter 45 µm liegenden Teilchen, bei welchem die Reaktionskomponenten — Natriumaluminat- und Natriumsilikatlösung — in einem Molverhältnis $SiO_2/Al_2O_3$ von 0,8 bis 1,6 : 1 und in einem Molverhältnis zwischen $H_2O$ und $Na_2O$ von 35 bis 50 : 1 vor der Ausfällung des amorphen Vorproduktes innig vermischt werden. Anschliessend wird die erhaltene Natriumaluminiumsilikat-Suspension nach Kristallisation unter Kristallisationsbedingungen bei einer Temperatur zwischen 85 und 105°C in der Kristallisationsmutterlauge 0,2 bis 6 Stunden getempert und während der Kristallisation und/oder der Temperung geschert.

Das wesentliche Merkmal der vorliegenden Erfindung — die getrennte Versprühung der Rohstoff-Lösungen in einem vor dem Düsenaustritt ausgebildeten Sprühkegel — ist aus diesem Stand Technik jedoch nicht herleitbar.

Beispiele

Für die labormässige Durchführung des erfindungsgemässen Verfahrens wurde eine vereinfachte Versuchsanordnung mit getrennter Sprüh- und Kristallisationsapparatur verwendet. Zur Sprühapparatur gehörte neben dem jeweiligen Sprühaggregat (siehe gesonderte Beschreibung) noch eine Kolbendosierpumpe mit zwei Köpfen, deren Kolben oszillierend im Gleichtakt arbeiteten und bei einer Kolbenhublänge von 7,5 mm jeweils 40 l Wasser zu fördern vermochten (Durchsatz während Betrieb und Stillstand stufenlos durch Veränderung der Kolbenhublänge von 0 bis 15 mm regulierbar). Die Aluminat- und die Silikat-Lösungen wurden jeweils in 5 l-Bechergläsern vorgelegt, mittels Wasserdampf über Tauchspiralen aufgeheizt und über Porzellanfritten von der Pumpe angesaugt. Als Sprühgefäss wurde ein offenes 5 l-Becherglas (35 cm hoch, 20 cm Durchmesser) verwendet; das Sprühaggregat ragte stets etwa 10 cm in das Becherglas hinein.

Bei Versprühung mittels Druckluft wurde diese über ein Druckgasfilter und eine Reduzierstation, die eine stufenlose Regulierung der Druckluft zwischen 0 und 5 bar ermöglichte, zugeführt. Für die bei einigen Beispielen angegebene Aufheizung der Druckluft wurde eine Widerstandsheizung mit Kohlering verwendet. Bei einem Temperatur des Heizkörpers von 240°C wurde nach Entspannung (ohne Flüssigkomponenten) beim Sprühaggregat 1 hinter dem Düsenmund bei 0,5 bar 76°C, bei 1,5 bar 73°C, bei 2,0 bar 68°C und bei 2,5 bar 65°C erreicht. Ohne Aufheizung hatte die entspannte Druckluft nur eine Temperatur von 17°C bei 0,5 bar beziehungsweise von 15°C bei 2,5 bar. Bei dem Sprühaggregat 2 wurden demgegenüber unter gleichen Bedingungen nach Entspannung um etwa 2 bis 3°C niedrigere Temperaturen erreicht.

Kristallisationen unter Rühren wurden unter Einhaltung der in den Beispielen angegebenen Bedingungen in 2 l-Dreihalskolben mit Heizpilz, Kontaktthermometer, Rückflusskühler und Rührer (Teflonblatt) durchgeführt. Kristallisationen ohne Rühren wurden nur bei Kristallisationstemperaturen oberhalb 90°C in dieser Glas-Apparatur vorgenommen; dabei wurde bis zum Erreichen der Kristallisationstemperatur schwach gerührt. Zur Kristallisation ohne Rühren bei niedrigeren Temperaturen von maximal 90°C wurden die gefällten Natriumaluminiumsilikate in Polyäthylenflaschen gefüllt und in den leicht verschlossenen Flaschen im Trockenschrank kristallisiert.

Für die Kristallisation wurden jeweils Fällungsmengen von 1500 g Gel eingesetzt. Nach beendeter Kristallisation wurden 200 ml Suspension entnommen, filtriert und der Feststoff so lange mit 60°C heissem entionisiertem Wasser gewaschen, bis das Waschwasser nur noch eine Restalkalität entsprechend pH 9 bis 10 aufwies; im Regelfall waren hierzu circa 3 l Wasser erforderlich.

Zur Charakterisierung wurden die gewaschenen Produkte über Nacht im Vakuumtrockenschrank bei 100°C getrocknet, gut verrieben

und mittels ihres Röntgendiagramms identifiziert. Die Zusammensetzung bezüglich Alkali, $Al_2O_3$ und $SiO_2$ wurde röntgenfluoreszenzanalytisch bestimmt. Als Wassergehalt ist der Glühverlust nach einer Stunde bei 800°C angegeben.

Der Kristallhabitus und die Grösse der Kristallite wurden rasterelektronenmikroskopisch bestimmt, die Korngrössenverteilung mittels Coulter-Counter® gemessen, der Nasssiebrückstand nach MOCKER bei Verwendung eines 25 µm-Siebes (1 g Aktivsubstanz in 100 ml entionisiertem Wasser aufgeschlämmt, 1 Minute im Ultraschallbad homogenisiert, 5 Minuten Nasssiebung mit Wasserdurck von 4 bar und einer Strömungsgeschwindigkeit von 400 l Wasser pro Stunde; Rückwägung der getrockneten Siebe) ermittelt.

Das Calciumbindevermögen (= «CaBy») der getrockneten Produkte wurde entsprechend DE-A-2 412 837 (Seite 27) bei 22 ± 2°C mit 1 g Aktivsubstanz pro Liter und 30° d Ausgangshärte nach 10 Minuten ermittelt und entsprechend als «mg CaO/g AS» (AS = Aktivsubstanz) angegeben.

Als Silikatkomponenten wurden in den Beispielen technische Wasserglaslösung (filtriert) beziehungsweise festes, wasserlösliches Natriumsilikat (technisches «Natriummetasilikat») verwendet. Das eingesetzte Wasserglas enthielt 8,0% $Na_2O$ und 26,9% $SiO_2$, das Festsilikat enthielt 50,9% $Na_2O$ und 47,8% $SiO_2$.

Als Aluminatkomponenten wurden technisches Natriummetaaluminat mit circa 41% $Na_2O$ und 55% $Al_2O_3$ beziehungsweise Hydrargillit mit circa 65% $Al_2O_3$ eingesetzt. Diese Feststoffe wurden mit den in den Beispielen angegebenen Mengen Wasser und Lauge (techn. Qualitäten) in der Siedehitze gelöst; unlösliche Rückstände wurden abfiltriert. Infolge schwankender Zusammensetzung der Ausgangskomponenten wurden die resultierenden Aluminatlaugen bezüglich ihres Gehalts an Alkali und $Al_2O_3$ titriert.

Alle Prozentangaben sind Gewichtsprozente, alle Verhältnisangaben sind Molverhältnisse.

Die in den Beispielen verwendeten Sprühaggregate 1 und 2 werden im folgenden beschrieben. Es handelt sich dabei stets um handelsübliche Düsen. Wie im Text angegeben, beschränkt sich das erfindungsgemässe Verfahren jedoch nicht auf diese Aggregattypen. Die für die Beispiele ausgewählten Düsen sind jedoch im besonderen Masse auch im Labormassstab zur Erzielung reproduzierbarer Ergebnisse geeignet.

Sprühaggregat 1

Dieses Aggregat ist als Dreistoffdüse ausgelegt; die Zerstäubung findet ausserhalb der Düse statt. Zwei der zugeführten Komponenten (Druckluft und eine Flüssigkomponente) erhalten vor Zusammenführung einen Drall.

Ein gerader Kanal 2 ohne Drallgebung mit konstanter Bohrung von 1,0 mm Durchmesser führt in Längsachse der Düse. Die Komponente wird entsprechend von oben herangeführt. Nur dieser Kanal lässt sich in seinem Querschnitt nicht verändern. Die beiden anderen Kanäle — 1 und 3 — sind konzentrisch dazu als Ringkanäle angeordnet. Die Komponenten werden von der Seite zugeführt. Der äussere Ringkanal 3 mit einer maximalen Spaltbreite von 1,5 mm (kreisförmiger Spalt mit 15 mm Aussendurchmesser und 12 mm Innendurchmesser) ist dabei für Druckluft vorgesehen, der mittlere Ringspalt 1 mit einer gleichen maximalen Spaltbreite von 1,5 mm (kreisförmiger Spalt mit 7 mm Aussendurchmesser und 4 mm Innendurchmesser) für die zweite Flüssigkomponente. Diese beiden konzentrischen Ringkanäle 1 und 3 sind mit Drallkörpern versehen und verengen sich am Düsenmund konisch. Durch eine Rändelschraube mit Skala lassen sich die Ringkanäle verengen beziehungsweise schliessen. Die Anordnung der Kanäle ist in Abbildung 2 vereinfacht wiedergegeben.

Diese Dreistoffdüse sprüht im kreisförmigen Vollkegel. Für die angegebenen Beispiele wurden die Ringkanäle so eingestellt, dass sich die dort angegebenen unterschiedlichen Sprühwinkel ergaben.

Sprühaggregat 2

Dieses Aggregat ist als Dreistoffdüse ausgelegt; die Zerstäubung findet ausserhalb der Düse statt. Zwei der zugeführten Komponenten (Druckluft und eine Flüssigkomponente) erhalten vor Zusammenführung einen Drall. Diese Düse entspricht zwar vom Arbeitsprinzip her weitgehend dem Sprühaggregat 1, ist jedoch für wesentlich höhere Mengendurchsätze geeignet.

Das Druckgas und eine Flüssigkomponente werden seitlich, die andere Flüssigkomponente von oben zugeführt. Der Kanal 2 in Längsachse der Düse weist einen Durchmesser von 10 mm auf und verengt sich am Düsenmund konisch auf 3 mm Durchmesser. Der dazu konzentrische Ringkanal 3 mit eingebautem Drallkörper für die seitlich zugeführte Flüssigkomponente weist eine maximale Spaltbreite von 1,0 mm auf (kreisförmiger Spalt mit 17 mm Aussendurchmesser und 15 mm Innendurchmesser); der Aussendurchmesser des Ringspalts verengt sich am Düsenmund konisch auf 8 mm bei veränderlichem Innendurchmesser (je nach Stellung des zentrischen Rohres). Die Druckluft wird über 1 (drallgebende Spalte) zugeführt; der Aussendurchmesser des konischen Ringkanals 1 verengt sich von 28 mm auf 14 mm bei einer maximalen Spaltbreite von 3 mm je nach Einstellung des Konus. Die Anordnung der Kanäle ist in Abbildung 3 vereinfacht wiedergegeben.

Diese Dreistoffdüse sprüht im kreisförmigen Vollkegel.

Beispiele 1a-1d

Diese Beispiele zeigen die Herstellung von hochkristallinem zeolithischen Natriumaluminiumsilikat des Typs NaA bei gleichbleibenden Ansatzverhältnissen unter Variation der Sprühbedingungen. Die Aluminatlösungen wurden

aus Hydrargillit und Natronlauge hergestellt, enthielten 13,52% $Na_2O$ und 9,67% $Al_2O_3$ entsprechend Molverhältnissen 1,0 $Al_2O_3$ : 2,3 $Na_2O$ : 45 $H_2O$ und wurden zu 25,0 kg pro Stunde dosiert. Die Silikatlösungen wurden durch Verdünnen von Wasserglaslösung mit Natronlauge erhalten, enthielten 6,84% $Na_2O$ und 9,18% $SiO_2$ entsprechend Molverhältnissen von 1,8 $SiO_2$ : 1,3 $Na_2O$ : 55 $H_2O$ und wurden zu 27,92 kg pro Stunde dosiert. Entsprechend wies der Gesamtfällungsansatz (vor Versprühung und Verdunsten von Wasser) Molverhältnisse von 3,6 $Na_2O$ : 1,0 $Al_2O_3$ : 1,8 $SiO_2$ : 100 $H_2O$ auf.

Zur Versprühung wurde das Sprühaggregat 1 verwendet. Aus der unterschiedlichen Temperatur- und Druckluftführung resultierte ein unterschiedlicher Wasserverlust im versprühten Ansatz und damit ein unterschiedlicher Wassergehalt im Kristallisationsansatz.

Die nach Kristallisation bei 85°C unter Rühren anfallenden Produkte des Typs NaA wiesen eine Zusammensetzung von 1,0 $Na_2O$ : 1,0 $Al_2O_3$ : 1,8 $SiO_2$ : 3,5 bis 3,9 $H_2O$ entsprechend ihren nur geringfügigen Unterschieden im Wassergehalt auf. Die rasterelektronenmikroskopischen Aufnahmen zeigten stets würfelförmige Kristallite der Kantenlänge 0,3 bis 1,2 µm mit abgerundeten Kanten. Die Produkte waren gemäss ihrer Röntgenbeugungsdiagramme hochkristallin und nicht mit anderen kristallinen Spezies verunreinigt.

Beispiel 1a
Reaktionsbedingungen

Temperatur der Flüssigkomponenten:
75°C
Sprühbedingungen:
Sprühaggregat Nr. 1
Druckluft mit 0,5 bar, nicht aufgeheizt,
Sprühwinkel 95°,
Temperatur der Sprühfällung: 66°C,
Wasserverlust: 2,1 kg pro Stunde
Kristallisationsansatz:
3,6 $Na_2O$ : 1,0 $Al_2O_3$ : 1,8 $SiO_2$ : 95 $H_2O$
Kristallisationszeit:
30 Minuten

Produkteigenschaften

Produkttyp:
hochkristallines Molekularsieb NaA
Zusammensetzung:
1,0 $Na_2O$ : 1,0 $Al_2O_3$ : 1,8 $SiO_2$ : 3,9 $H_2O$
Wassergehalt:
20,5%
CaBv:
159 mg CaO/g AS
Nasssiebrückstand:
0,04%
Korngrössenverteilung:
Verteilungsmaximum bei 2,5 bis 3,2 µm
mittlerer Korndurchmesser circa 2,9 µm
Anteil > 10 µm: 1 Volumenprozent
> 5 µm: 4 Volumenprozent
> 3 µm: 42 Volumenprozent
> 2 µm: 92 Volumenprozent

Beispiel 1b
Reaktionsbedingungen

Temperatur der Flüssigkomponenten:
75°C
Sprühbedingungen:
Sprühaggregat Nr. 1
Druckluft mit 2,5 bar, nicht aufgeheizt,
Sprühwinkel 72°,
Temperatur der Sprühfällung: 60°C
Wasserverlust: 8,5 kg pro Stunde
Kristallisationsansatz:
3,6 $Na_2O$ : 1,0 $Al_2O_3$ : 1,8 $SiO_2$ : 80 $H_2O$
Kristallisationszeit:
30 Minuten

Produkteigenschaften

Produkttyp:
hochkristallines Molekularsieb NaA
Zusammensetzung:
1,0 $Na_2O$ : 1,0 $Al_2O_3$ : 1,8 $SiO_2$ : 3,6 $H_2O$
Wassergehalt:
19,2%
CaBv:
160 mg CaO/g AS
Nasssiebrückstand:
0,09%
Korngrössenverteilung:
Verteilungsmaximum bei 2,0 bis 2,5 µm
mittlerer Korndurchmesser circa 2,7 µm
Anteil > 10 µm: 1 Volumenprozent
> 5 µm: 2 Volumenprozent
> 3 µm: 22 Volumenprozent
> 2 µm: 85 Volumenprozent

Beispiel 1c
Reaktionsbedingungen

Temperatur der Flüssigkomponenten:
65°C
Sprühbedingungen:
Sprühaggregat Nr. 1
Druckluft mit 1,0 bar, aufgeheizt,
(65°C hinter dem Düsenmund),
Sprühwinkel 78°
Temperatur der Sprühfällung: 60°C
Wasserverlust: 12,8 kg pro Stunde
Kristallisationsansatz:
3,6 $Na_2O$ : 1,0 $Al_2O_3$ : 1,8 $SiO_2$ : 70 $H_2O$
Kristallisationszeit:
15 Minuten

Produkteigenschaften

Produkttyp:
hochkristallines Molekularsieb NaA
Zusammensetzung:
1,0 $Na_2O$ : 1,0 $Al_2O_3$ : 1,8 $SiO_2$ : 3,8 $H_2O$
Wassergehalt:
20,1%
CaBv:

150 mg CaO/g AS
Nasssiebrückstand:
0,10%
Korngrössenverteilung:
Verteilungsmaximum bei 1,6 bis 2,0 µm
mittlerer Korndurchmesser circa 2,0 µm
Anteil > 10 µm: 2 Volumenprozent
> 5 µm: 3 Volumenprozent
> 3 µm: 6 Volumenprozent
> 2 µm: 41 Volumenprozent

Beispiel 1d
Reaktionsbedingungen

Temperatur der Flüssigkomponenten:
92°C
Sprühbedingungen:
Sprühaggregat Nr. 1
Druckluft mit 2,0 bar, nicht aufgeheizt,
Sprühwinkel 88°
Temperatur der Sprühfällung: 63°C
Wasserverlust: 7,3 kg pro Stunde
Kristallisationsansatz:
3,6 $Na_2O$ : 1,0 $Al_2O_3$ : 1,8 $SiO_2$ : 83 $H_2O$
Kristallisationszeit:
30 Minuten

Produkteigenschaften

Produkttyp:
hochkristallines Molekularsieb NaA
Zusammensetzung:
1,0 $Na_2O$ : 1,0 $Al_2O_3$ : 1,8 $SiO_2$ : 3,5 $H_2O$
Wassergehalt:
18,8%
CaBv:
150 mg CaO/g AS
Nasssiebrückstand:
0,01%
Korngrössenverteilung:
Verteilungsmaximum bei 2,0 bis 2,5 µm
mittlerer Korndurchmesser circa 2,7 µm
Anteil > 10 µm: < 1 Volumenprozent
> 5 µm: 1 Volumenprozent
> 3 µm: 20 Volumenprozent
> 2 µm: 83 Volumenprozent

Beispiel 2
Aus Hydrargillit und Natronlauge wurde eine Aluminatlösung mit 3,27% $Na_2O$ und 3,71% $Al_2O_3$ entsprechend Molverhältnissen von 1,45 $Na_2O$ : 1,0 $Al_2O_3$ : 142 $H_2O$ hergestellt. Eine Silikatlösung mit 9,49% $SiO_2$ und 9,80% $Na_2O$ entsprechend Molverhältnissen 3,7 $Na_2O$ : 3,7 $SiO_2$ : 105 $H_2O$ wurde durch Lösen von Metasilikat in Wasser zubereitet. Die Aluminatlösung wurde mit 27,5 kg pro Stunde, die Silikatlösung mit 23,43 kg pro Stunde dosiert, so dass ein Gesamtansatz mit den Molverhältnissen 5,15 $Na_2O$ : 1,0 $Al_2O_3$ : 3,7 $SiO_2$ : 247 $H_2O$ resultierte.

Die beiden Komponenten wurden auf 90°C aufgeheizt und am Sprühaggregat 1 mit 2,0 bar Druckluft (nicht aufgeheizt) zerstäubt. Aus diesen Sprühbedingungen resultierte ein Sprühwinkel von 72°, eine Temperatur des versprühten Ansatzes von 75°C und ein Wasserverlust von 14,8 kg pro Stunde. Der nach Versprühung anfallende Ansatz wies ein Molverhältnis $H_2O$ : $Al_2O_3$ = 165 auf.

Das sich sofort bildende Gel wurde ohne Rühren in der Siedehitze 4 Stunden lang kristallisiert. Das Produkt wurde nach Waschen und Trocknen röntgenographisch als hochkristallines Molekularsieb NaX identifiziert. Aufgrund der silikatreichen Zusammensetzung entsprechend 1,0 $Na_2O$ : 1,0 $Al_2O_3$ : 3,0 $SiO_2$ : 4,0 $H_2O$ war das Calciumbindevermögen mit 118 mg CaO/g AS verhältnismässig niedrig.

Verteilungsmaximum:
2,0 bis 2,6 µm
mittlere Korngrösse:
2,7 µm
Korngrössenverteilung:
Kornanteil > 10 µm: 1 Volumenprozent
> 5 µm: 2 Volumenprozent
> 3 µm: 23 Volumenprozent
> 2 µm: 83 Volumenprozent
Nasssiebrückstand:
0,08%

Die rasterelektronenmikroskopischen Aufnahmen zeigten gut ausgeprägte quaderförmige Kristallite mit abgerundeten Kanten und einem Durchmesser von circa 0,4 bis 1,5 µm.

Beispiel 3
Aus Hydrargillit und Natronlauge wurde eine Aluminatlösung mit 6,6% $Na_2O$ und 7,7 $Al_2O_3$ entsprechend Molverhältnissen von 1,4 $Na_2O$ : 1,0 $Al_2O_3$ : 63 $H_2O$ hergestellt. Eine Silikatlösung mit 3,72% $Na_2O$ und 9,84% $SiO_2$ entsprechend Molverhältnissen von 1,1 $Na_2O$ : 3,0 $SiO_2$ : 88 $H_2O$ wurde durch Verdünnen von Wasserglaslösung mit Natronlauge zubereitet. Die Aluminatlösung wurde mit 16,9 kg pro Stunde, die Silikatlösung mit 23,4 kg pro Stunde dosiert, so dass ein Gesamtsatz mit den Molverhältnissen 2,5 $Na_2O$ : 1,0 $Al_2O_3$ : 3,0 $SiO_2$ : 151 $H_2O$ resultierte.

Die beiden Komponenten wurden auf 80°C aufgeheizt und am Sprühaggregat 1 mit 2,0 bar Druckluft (nicht aufgeheizt) gemeinsam zerstäubt. Diese Sprühbedingungen erbrachten einen Sprühwinkel von 70°, eine Temperatur des versprühten Ansatzes von 65°C und einen Wasserverlust von 8,2 kg pro Stunde. Der nach Versprühung anfallende Ansatz wies demnach ein Molverhältnis $H_2O$ : $Al_2O_3$ = 116 auf.

Das durch die Versprühung erhaltene Gel wurde ohne Rühren in der Siedehitze 5 Stunden lang kristallisiert. Das Produkt wurde nach Waschen und Trocknen röntgenographisch als hochkristallines Molekularsieb NaX identifiziert.

Zusammensetzung:
1,0 $Na_2O$ : 1,0 $Al_2O_3$ : 2,8 $SiO_2$ : 4,9 $H_2O$
Wassergehalt:
21,0%
CaBv:
121 mg CaO/g AS

Nasssiebrückstand:
0,01
Verteilungsmaximum:
2,0 bis 2,5 µm
mittlere Korngrösse:
2,3 µm
Korngrössenverteilung:

| | | |
|---|---|---|
| Kornanteil | > 10 µm: < | 1 Volumenprozent |
| | > 5 µm: | 1 Volumenprozent |
| | > 3 µm: | 13 Volumenprozent |
| | > 2 µm: | 75 Volumenprozent |

Die rasterelektronenmikroskopischen Aufnahmen zeigten gut ausgeprägte, relativ scharkantige quaderförmige Kristallite mit einer Kantenlänge von überwiegend 1,0 bis 1,5 µm.

Beispiel 4

Aus Natriummetaaluminat und Natronlauge wurde eine Aluminatlösung mit 3,08% $Al_2O_3$ und 8,65% $Na_2O$ entsprechend Molverhältnissen von 4,62 $Na_2O$ : 1,0 $Al_2O_3$ : 163 $H_2O$ hergestellt. Eine Wasserglaslösung wurde zu 5,33% $Na_2O$ und 17,92% $SiO_2$ entsprechend Molverhältnissen von 2,88 $Na_2O$ : 10,0 $SiO_2$ : 143 $H_2O$ verdünnt. Die Aluminatlösung wurde mit 19,9 kg pro Stunde, die Silikatlösung mit 20,1 kg pro Stunde dosiert, so dass ein Gesamtansatz mit den Molverhältnissen von 7,5 $Na_2O$ : 1,0 $Al_2O_3$ : 10,0 $SiO_2$ : 306 $H_2O$ resultierte.

Die beiden Komponenten wurden auf 85°C vorgeheizt und am Sprühaggregat 1 mit 2,0 bar Druckluft (aufgeheizt) gemeinsam zerstäubt. Aus diesen Sprühbedingungen ergaben sich ein Sprühwinkel von 64°, eine Temperatur des versprühten Ansatzes von 78°C und ein Wasserverlust von 12,8 kg pro Stunde. Der nach Versprühung anfallende Ansatz wies demnach ein Molverhältnis $H_2O$ : $Al_2O_3$ = 187 auf.

Das durch die Versprühung erhaltene Gel wurde 16 Stunden lang in der Siedehitze unter Rückfluss und Rühren kristallisiert. Das Produkt wurde nach Waschen und Trocknen röntgenographisch als hochkristallines Molekularsieb P (kubische kationenaustauschende Modifikation) identifiziert.

Zusammensetzung:
1,0 $Na_2O$ : 1,0 $Al_2O_3$ : 3,7 $SiO_2$ : 4,3 $H_2O$
Wassergehalt:
16,7%
CaBv:
122 mg CaO/g AS
Nasssiebrückstand:
0,08%
Verteilungsmaximum:
5 bis 6 µm
mittlere Korngrösse:
5,8 µm
Korngrössenverteilung:

| | | |
|---|---|---|
| Kornanteil | > 10 µm: | 3 Volumenprozent |
| | > 7 µm: | 30 Volumenprozent |
| | > 5 µm: | 62 Volumenprozent |
| | > 3 µm: | 90 Volumenprozent |

Die rasterelektronenmikroskopischen Aufnahmen zeigten die charakteristisch strukturierten kugelförmigen Kristallite mit einem Durchmesser von überwiegend nur 1,0 bis 1,5 µm.

Beispiel 5

Aus Hydrargillit und Natronlauge wurde eine Aluminatlösung mit 6,33% $Al_2O_3$ und 5,46% $Na_2O$ entsprechend Molverhältnissen von 1,0 $Al_2O_3$ : 1,42 $Na_2O$ : 79 $H_2O$ hergestellt. Eine Silikatlösung mit 5,33% $Na_2O$ und 17,92% $SiO_2$ entsprechend Molverhältnissen von 2,88 $Na_2O$ : 10 $SiO_2$ : 143 $H_2O$ wurde durch Verdünnen einer Wasserglaslösung mit Wasser zubereitet. Die Aluminatlösung wurde mit 13,6 kg pro Stunde, die Silikatlösung mit 28,6 kg pro Stunde dosiert, so dass ein Gesamtansatz mit den Molverhältnissen 4,3 $Na_2O$ : 1,0 $Al_2O_3$ : 10 $SiO_2$ : 222 $H_2O$ resultierte.

Die beiden Komponenten wurden auf 40°C aufgeheizt und am Sprühaggregat 1 mit 2,0 bar Druckluft (nicht aufgeheizt) gemeinsam zerstäubt. Aus der Düseneinstellung und den angegebenen Sprühbedingungen ergaben sich ein Sprühwinkel von 63°, eine Temperatur des versprühten Ansatzes von 23°C und ein Wasserverlust von 3,7 kg pro Stunde. Der nach Versprühung anfallende Ansatz wies demnach ein Molverhältnis $H_2O$ : $Al_2O_3$ = 198 auf.

Das durch Versprühung erhaltene Gel wurde 8 Stunden lang unter Rühren und Rückfluss in der Siedehitze kristallisiert. Das Produkt wurde nach Waschen und Trocknen röntgenographisch als hochkristallines Molekularsieb 1' (kubische und daher kationenaustauschende Modifikation) identifiziert.

Zusammensetzung:
1,0 $Na_2O$ : 1,0 $Al_2O_3$ : 4,5 $SiO_2$ : 4,7 $H_2O$
Wassergehalt:
16,3%
CaBv:
103 mg CaO/g AS
Nasssiebrückstand:
0,09%
Verteilungsmaximum:
5 bis 6 µm
mittlere Korngrösse:
5,2 µm
Korngrössenverteilung:

| | | |
|---|---|---|
| Kornanteil | > 10 µm: | 2 Volumenprozent |
| | > 7 µm: | 18 Volumenprozent |
| | > 5 µm: | 60 Volumenprozent |
| | > 3 µm: | 92 Volumenprozent |

Die rasterelektronenmikroskopischen Aufnahmen zeigten extrem feinteilige kugelförmige Kristallite mit Durchmessern von ganz überwiegend unterhalb 1 µm.

Beispiele 6a-6c

Diese Beispiele wurden analog den Beispielen 1a-1c, jedoch unter Verwendung des Sprühaggregats 2 durchgeführt. Die unterschiedlichen Sprühbedingungen sind im folgenden angegeben. Die nach Kristallisation bei 85°C unter Rühren anfallenden Produkte waren trotz extrem kurzer Kristallisationszeiten hochkristallin und enthielten gemäss ihrer Röntgendiffraktogramme ausser Molekularsieb NaA keine kristallinen weiteren Bestandteile. Die chemische Zusammensetzung der Produkte differierte mit Molverhältnissen von 1,0 $Na_2O$ : 1,0 $Al_2O_3$ : 1,8 $SiO_2$ : 3,4 bis 3,5 $H_2O$ im Rahmen der Analysengenauigkeit nur geringfügig bezüglich des Wassergehalts. Die rasterelektronenmikroskopischen Aufnahmen zeigten stets würfelförmige Kristallite der Kantenlänge 0,3 bis 1,2 µm mit abgerundeten Kanten.

Beispiel 6a
Reaktionsbedingungen

Temperatur der Flüssigkomponenten:
80°C
Sprühbedingungen:
Sprühaggregat Nr. 2
Druckluft mit 1,0 bar, nicht aufgeheizt,
Sprühwinkel 75°,
Temperatur der Sprühfällung: 55°C
Wasserverlust: 3,4 kg pro Stunde
Kristallisationsansatz:
3,6 $Na_2O$ : 1,0 $Al_2O_3$ : 1,8 $SiO_2$ : 92 $H_2O$
Kristallisationszeit:
20 Minuten

Produkteigenschaften

Produkttyp:
hochkristallines Molekularsieb NaA
Zusammensetzung:
1,0 $Na_2O$ : 1,0 $Al_2O_3$ : 1,8 $SiO_2$ : 3,4 $H_2O$
Wassergehalt:
18,4%
CaBv:
162 mg CaO/g AS
Nasssiebrückstand:
0,03%
Korngrössenverteilung:
Verteilungsmaximum bei 2,0 bis 2,5 µm
mittlerer Korndurchmesser circa 2,5 µm
Anteil > 10 µm: 2 Volumenprozent
> 5 µm: 9 Volumenprozent
> 3 µm: 16 Volumenprozent
> 2 µm: 79 Volumenprozent

Beispiel 6b
Reaktionsbedingungen
Temperatur der Flüssigkomponenten:
80°C
Sprühbedingungen:
Sprühaggregat Nr. 2
Druckluft mit 2,5 bar, aufgeheizt,
Sprühwinkel 64°
Temperatur der Sprühfällung: 51°C
Wasserverlust: 8,5 kg pro Stunde
Kristallisationsansatz:
3,6 $Na_2O$ : 1,0 $Al_2O_3$ : 1,8 $SiO_2$ : 80 $H_2O$
Kristallisationszeit:
10 Minuten

Produkteigenschaften

Produkttyp:
hochkristallines Molekularsieb NaA
Zusammensetzung:
1,0 $Na_2O$ : 1,0 $Al_2O_3$ : 1,8 $SiO_2$ : 3,5 $H_2O$
Wassergehalt:
18,8%
CaBv:
156 mg CaO/g AS
Nasssiebrückstand:
0,01%
Korngrössenverteilung:
Verteilungsmaximum bei 1,6 bis 2,0 µm
mittlerer Korndurchmesser circa 2,2 µm
Anteil > 10 µm: 1 Volumenprozent
> 5 µm: 2 Volumenprozent
> 3 µm: 7 Volumenprozent
> 2 µm: 62 Volumenprozent

Beispiel 6c
Reaktionsbedingungen

Temperatur der Flüssigkomponenten:
90°C
Sprühbedingungen:
Sprühaggregat Nr. 2
Druckluft mit 2,0 bar, aufgeheizt,
Sprühwinkel 72°
Temperatur der Sprühfällung: 63°C
Wasserverlust: 6,8 kg pro Stunde
Kristallisationsansatz:
3,6 $Na_2O$ : 1,0 $Al_2O_3$ : 1,8 $SiO_2$ : 84 $H_2O$
Kristallisationszeit:
10 Minuten

Produkteigenschaften

Produkttyp:
hochkristallines Molekularsieb NaA
Zusammensetzung:
1,0 $Na_2O$ : 1,0 $Al_2O_3$ : 1,8 $SiO_2$ : 3,5 $H_2O$
Wassergehalt:
18,8%
CaBv:
158 mg CaO/g AS
Nasssiebrückstand:
0,02%
Korngrössenverteilung:
Verteilungsmaximum bei 2,0 bis 2,5 µm
mittlerer Korndurchmesser circa 2,5 µm
Anteil > 10 µm: 2 Volumenprozent
> 5 µm: 5 Volumenprozent
> 3 µm: 25 Volumenprozent
> 2 µm: 79 Volumenprozent

**Patentansprüche**

1. Verfahren zur kontinuierlichen Herstellung feinstteiliger, wasserunlöslicher, kristalliner, noch gebundenes Wasser enthaltender Natriumaluminiumsilikate der allgemeinen Formel:

$x\, Na_2O \,.\, Al_2O_3 \,.\, y\, SiO_2$,

in der x eine Zahl von 0,2 bis 1,5 und y eine Zahl von 1,5 bis 10 bedeuten, die Anteile mit einer Korngrösse über 25 µm von weniger als 0,1 Gew.-% aufweisen, durch Vermischen von wassergelöstem Natriumaluminat mit wassergelöstem Natriumsilikat in Gegenwart von überschüssigem Natriumhydroxid, wobei eine Aluminatlösung mit der Zusammensetzung entsprechend den Molverhältnissen:

1 $Al_2O_3$ : 1 bis 10 $Na_2O$ : 20 bis 200 $H_2O$

sowie eine Silikatlösung mit der Zusammensetzung entsprechend den Molverhältnissen:

$Na_2O$ : $SiO_2$ von 0,1 bis 10 und
$H_2O$ : $SiO_2$ von 5 bis 200

in einem Gewichtsverhältnis entsprechend der Gesamtzusammensetzung bezüglich der Molverhältnisse von

1,5 bis 15 $Na_2O$ : 1 $Al_2O_3$ : 1 bis 15 $SiO_2$ : 50 bis 400 $H_2O$

umgesetzt wird, dadurch gekennzeichnet, dass die Vermischung durch Versprühung bei einer Temperatur im Bereich von 0 bis 103°C, unter Verwendung eines Düsensystems mit mindestens zwei Flüssigkeitskanälen, in dem die Aluminat- und die Silikatlösung getrennt der Düsenaustrittsöffnung zugeführt werden, in einer solchen Weise erfolgt, dass die beiden Lösungen erst nach Verlassen der Düsenaustrittsöffnung aufeinandertreffen und noch im Sprühstrahl unter Bildung eines röntgenamorphen Natriumaluminiumsilikat-Gels miteinander reagieren und dass anschliessend das erhaltene Gel vor der Filtration gegebenenfalls unter Rühren auf eine Temperatur im Bereich von 20 bis 150°C erwärmt und bei dieser Temperatur kristallisiert wird.

2. Verfahren nach Anspruch 1, dadurch gekennzeichnet, dass die beiden Lösungen unter Zuhilfenahme eines inerten Druckgases, das einen Druck im Bereich von 0,3 bis 3 bar aufweist, miteinander versprüht werden.

3. Verfahren nach Anspruch 1 und 2, dadurch gekennzeichnet, dass als inertes Druckgas gegebenenfalls vorgeheizte Druckluft verwendet wird.

4. Verfahren nach Anspruch 1 und 3, dadurch gekennzeichnet, dass die beiden Lösungen unter Verwendung einer Mehrstoffdüse mit mindestens zwei Flüssigkeitskanälen und mindestens einem Druckgaskanal miteinander versprüht werden.

5. Verfahren nach Anspruch 1-4, dadurch gekennzeichnet, dass zur Herstellung eines kristallinen Natriumaluminiumsilikats vom Typ NaA mit einer mittleren Teilchengrösse kleiner als 3 µm eine Aluminatlösung mit der Zusammensetzung entsprechend den Molverhältnissen

1 $Al_2O_3$ : 1 bis 4 $Na_2O$ : 20 bis 200 $H_2O$

sowie eine Silikatlösung mit der Zusammensetzung entsprechend den Molverhältnissen

$Na_2O$ : $SiO_2$ von 0,1 bis 3 und
$H_2O$ : $SiO_2$ von 5 bis 50

in einem Gewichtsverhältnis entsprechend der Gesamtzusammensetzung bezüglich der Molverhältnisse von

1,8 bis 6 $Na_2O$ : 1 $Al_2O_3$ : 1 bis 2,4 $SiO_2$ : 50 bis 300 $H_2O$

miteinander versprüht werden und die Kristallisation für mindestens 10 Minuten bei einer Temperatur im Bereich von 70 bis 90°C unter Rühren erfolgt.

6. Verfahren nach Anspruch 5, dadurch gekennzeichnet, dass die beiden zu versprühenden Lösungen sowie gegebenenfalls auch das Druckgas so erwärmt werden, dass im Sprühstrahl Temperaturen im Bereich von 60 bis 80°C resultieren.

7. Verfahren nach Anspruch 1-4, dadurch gekennzeichnet, dass zur Herstellung eines kristallinen Natriumaluminuimsilikats vom Typ NaX mit einer mittleren Teilchengrösse kleiner als 2 µm eine Aluminatlösung mit der Zusammensetzung entsprechend den Molverhältnissen

1 $Al_2O_3$ : 1 bis 5 $Na_2O$ : 20 bis 200 $H_2O$

sowie eine Silikatlösung mit der Zusammensetzung entsprechend den Molverhältnissen

$Na_2O$ : $SiO_2$ von 0,1 bis 3 und
$H_2O$ : $SiO_2$ von 5 bis 100

in einem Gewichtsverhältnis entsprechend der Gesamtzusammensetzung bezüglich der Molverhältnisse von

2,5 bis 10 $Na_2O$ : 1 $Al_2O_3$ : 2,5 bis 10 $SiO_2$ : 80 bis 400 $H_2O$

miteinander versprüht werden und die Kristallisation für mindestens eine Stunde bei einer Temperatur im Bereich von 85 bis 105°C erfolgt.

8. Verfahren nach Anspruch 7, dadurch gekennzeichnet, dass die beiden zu versprühenden Lösungen sowie gegebenenfalls auch das Druckgas so erwärmt werden, dass im Sprühstrahl Temperaturen im Bereich von 60 bis 95°C resultieren.

9. Verfahren nach Anspruch 1-4, dadurch gekennzeichnet, dass zur Herstellung eines kristallinen Natriumaluminiumsilikats vom Typ P der kubischen Form mit einer mittleren Teilchengrösse kleiner als 6 µm eine Aluminatlösung mit der Zusammensetzung entsprechend den Molverhältnissen

1 $Al_2O_3$ : 1 bis 5 $Na_2O$ : 20 bis 200 $H_2O$

sowie eine Silikatlösung mit der Zusammensetzung entsprechend den Molverhältnissen

$Na_2O : SiO_2$ von 0,1 bis 3 und
$H_2O : SiO_2$ von 5 bis 100

in einem Gewichtsverhältnis entsprechend der Gesamtzusammensetzung bezüglich der Molverhältnisse von

1,5 bis 10 $Na_2O$ : 1 $Al_2O_3$ : 3 bis 10 $SiO_2$ : 100 bis 400 $H_2O$

miteinander versprüht werden und die Kristallisation für mindestens eine Stunde bei einer Temperatur im Bereich von 90 bis 105°C erfolgt.

10. Verfahren nach Anspruch 9, dadurch gekennzeichnet, dass die beiden zu versprühenden Lösungen sowie gegebenenfalls auch das Druckgas so erwärmt werden, dass im Sprühstrahl Temperaturen im Bereich von 60 bis 100°C resultieren.

**Revendications**

1. Procédé de fabrication en continu de silicates d'aluminium et de sodium très finement divisés, insolubles dans l'eau, cristallins, contenant encore de l'eau liée, de formule générale:

x $Na_2O$ . $Al_2O_3$ . y $SiO_2$,

dans laquelle x signifie un nombre de 0,2 à 1,5 et y un nombre da 1,5 à 10, qui présentent des fractions de dimension de grain supérieure à 25 µm qui sont de moins de 0,1% en poids, par mélange d'aluminate de sodium dissous dans de l'eau avec du silicate de sodium dissous dans de l'eau en présence d'hydroxyde de sodium en excès, en faisant réagir une solution d'aluminate de composition correspondant aux rapports molaires:

1 $Al_2O_3$ : 1 à 10 $Na_2O$ : 20 à 200 $H_2O$

de même qu'une solution de silicate de sodium de composition correspondant aux rapports molaires:

$Na_2O : SiO_2$ de 0,1 à 10 et
$H_2O : SiO_2$ de 5 à 200

dans un rapport pondéral correspondant à la composition totale concernant les rapports molaires de

1,5 à 15 $Na_2O$ : 1 $Al_2O_3$ : 1 à 15 $SiO_2$ : 50 à 400 $H_2O$,

caractérisé en ce que le mélange a lieu par pulvérisation à une température dans l'intervalle de 0 à 103°C, avec utilisation d'un système de tuyère avec au moins deux canaux de liquide, dans lequel la solution d'aluminate et celle de silicate sont alimentées séparément à l'ouverture de sortie de la tuyère, de telle sorte que les deux solutions ne se rencontrent mutuellement qu'après avoir quitté l'ouverture de sortie de la tuyère et réagissent déjà entre elles dans le jet pulvérisé avec formation d'un gel de silicate d'aluminium et de sodium amorphe aux rayons X, et en ce qu'ensuite le gel obtenu avant la filtration, éventuellement sous agitation, est chauffé à une température dans l'intervalle de 20 à 150°C et est cristallisé à cette température.

2. Procédé selon la revendication 1, caractérisé en ce que les deux solutions sont pulvérisées ensemble à l'aide d'un gaz comprimé inerte qui présente une pression dans l'intervalle de 0,3 à 3 bars.

3. Procédé selon les revendications 1 et 2, caractérisé en ce qu'en tant que gaz comprimé inerte on utilise de l'air comprimé éventuellement préchauffé.

4. Procédé selon les revendications 1 et 3, caractérisé en ce que les deux solutions sont pulvérisées ensemble avec utilisation d'une tuyère à plusieurs substances comportant au moins deux canaux de liquide et au moins un canal de gaz comprimé.

5. Procédé selon les revendications 1 à 4, caractérisé en ce que pour la fabrication d'un silicate d'aluminium et de sodium cristallin de type NaA ayant une dimension moyenne de particule inférieure à 3 µm on pulvérise ensemble une solution d'aluminate de composition correspondant aux rapport molaires

1 $Al_2O_3$ : 1 à 4 $Na_2O$ : 20 à 200 $H_2O$

de même qu'une solution de silicate de composition correspondant aux rapports molaires

$Na_2O : SiO_2$ de 0,1 à 3 et
$H_2O : SiO_2$ de 5 à 50

dans un rapport pondéral correspondant à la composition globale concernant les rapports molaires de

1,8 à 6 $Na_2O$ : 1 $Al_2O_3$ : 1 à 2,4 $SiO_2$ : 50 à 300 $H_2O$

et en ce que la cristallisation a lieu pendant au moins 10 minutes à une température dans l'intervalle de 70 à 95°C sous agitation.

6. Procédé selon la revendication 5, caractérisé en ce que les deux solution à pulvériser de même qu'éventuellement aussi le gaz comprimé sont chauffés en sorte que dans le jet pulvérisé il en résulte des températures dans l'intervalle de 60 à 80°C.

7. Procédé selon les revendications 1 à 4, caractérisé en ce que pour la fabrication d'un silicate d'aluminium et de sodium cristallin du type NaX ayant une dimension moyenne de particule inférieure à 2 µm on pulvérise ensemble

une solution d'aluminate de composition correspondant aux rapports molaires

$1\ Al_2O_3 : 1\ à\ 5\ Na_2O : 20\ à\ 200\ H_2O$

de même qu'une solution de silicate de composition correspondant aux rapports molaires:

$Na_2O : SiO_2$ de 0,1 à 3 et
$H_2O : SiO_2$ de 5 à 100

dans un rapport pondéral correspondant à la composition globale en ce qui regarde les rapports molaires de

$2,5\ à\ 10\ Na_2O : 1\ Al_2O_3 : 2,5\ à\ 10\ SiO_2 : 80\ à\ 400\ H_2O$

et en ce que la cristallisation a lieu pendant au moins une heure à une température dans l'intervalle de 85 à 105°C.

8. Procédé selon la revendication 7, caractérisé en ce que les deux solutions à pulvériser de même qu'éventuellement aussi le gaz comprimé sont chauffés pour qu'il en résulte dans le jet pulvérisé des températures dans l'intervalle de 60 à 95°C.

9. Procédé selon les revendications 1 à 4, caractérisé en ce que pour la fabrication d'un silicate d'aluminium et de sodium cristallin du type P de forme cubique, ayant une dimension moyenne de particule inférieure à 6 µm, on pulvérise ensemble une solution d'aluminate de composition répondant aux rapports molaires

$1\ Al_2O_3 : 1\ à\ 5\ Na_2O : 20\ à\ 200\ H_2O$

de même qu'une solution de silicate de composition répondant aux rapports molaires

$Na_2O : SiO_2$ de 0,1 à 3 et
$H_2O : SiO_2$ de 5 à 100

dans un rapport pondéral correspondant à la composition globale en ce qui regarde les rapports molaires de

$1.5\ à\ 10\ Na_2O : 1\ Al_2O_3 : 3\ à\ 10\ SiO_2 : 100\ à\ 400\ H_2O$

et en ce que la cristallisation a lieu pendant au moins une heure à une température dans l'intervalle de 90 à 105°C.

10. Procédé selon la revendication 9, caractérisé en ce que les deux solutions à pulvériser de même que éventuellement aussi le gaz comprimé sont chauffés pour qu'il en résulte dans le jet pulvérisé des températures dans l'intervalle de 60 à 100°C.

**Claims**

1. A process for the continuous production of very finely particulate, water-insoluble, crystalline sodium aluminium silicates still containing bound water and corresponding to the following general formula

$x\ Na_2O \cdot Al_2O_3 \cdot y\ SiO_2$,

in which x is a number of from 0.2 to 1.5 and y is a number of from 1.5 to 10,
in which fractions having a grain size of larger than 25 µm are present in a quantity of less than 0.1% by weight, by mixing sodium aluminate dissolved in water with sodium silicate dissolved in water in the presence of excess sodium hydroxide, an aluminate solution having a composition corresponding to the following molar ratios:

$1\ Al_2O_3 : 1\ to\ 10\ Na_2O : 20\ to\ 200\ H_2O$

and a silicate solution having a composition corresponding to the following molar ratios:

$Na_2O : SiO_2$ from 0.1 to 10 and
$H_2O : SiO_2$ from 5 to 200

being reacted in a ratio by weight corresponding to an overall composition in terms of molar ratios of from

$1.5\ to\ 15\ Na_2O : 1\ Al_2O_3 : 1\ to\ 15\ SiO_2 : 50\ to\ 400\ H_2O$,

characterised in that mixing is carried out by spraying at a temperature in the range from 0 to 103°C using a nozzle system comprising at least two liquid channels in which the aluminate solution ad the silicate solution are delivered separately to the nozzle outlet opening, in such a way that the two solutions only meet after leaving the nozzle outlet opening and react with one another in the spray stream to form an X-ray amorphous sodium aluminium silicate gel and in that thereafter the gel obtained is heated before filtration and optionally with stirring to a temperature in the range from 20 to 150°C and is crystallised at that temperature.

2. A process as claimed in Claim 1, characterised in that the two solutions are sprayed with one another by means of an inert compressed gas which is under a pressure of from 0.3 to 3 bars.

3. A process as claimed in Claims 1 and 2, characterised in that optionally preheated compressed air is used as the inert compressed gas.

4. A process as claimed in Claims 1 and 3, characterised in that the two solutions are sprayed with one another using a multicomponent nozzle comprising at least two liquid channels and at least one compressed gas channel.

5. A process as claimed in Claims 1 to 4, characterised in that, to produce a crystalline sodium aluminium silicate of the NaA type having an average particle size of less than 3 µm, an aluminate solution having a composition corresponding to the following molar ratios

1 $Al_2O_3$ : 1 to 4 $Na_2O$ : 20 to 200 $H_2O$

and a silicate solution having a composition corresponding to the following molar ratios

$Na_2O$ : $SiO_2$ from 0.1 to 3 and
$H_2O$ : $SiO_2$ from 5 to 50

are sprayed with one another in a ratio by weight corresponding to the overall composition in terms of the molar ratios of from

1.8 to 6 $Na_2O$ : 1 $Al_2O_3$ : 1 to 2.4 $SiO_2$ : 50 to 300 $H_2O$

and crystallisation takes place over a period of at least 10 minutes with stirring at a temperature in the range form 70 to 95°C.

6. A process as claimed in Claim 5, characterised in that the two solutions to be sprayed and, optionally, the compressed gas are heated to such an extent that temperatures of from 60 to 80°C prevail in the spray stream.

7. A process as claimed in Claims 1 to 4, characterised in that, to produce a crystalline sodium aluminium silicate of the NaX type having an average particle size of less than 2 µm, an aluminate solution having a composition corresponding to the following molar ratios

1 $Al_2O_3$ : 1 to 5 $Na_2O$ : 20 to 200 $H_2O$

and a silicate solution having a composition corresponding to the following molar ratios

$Na_2O$ : $SiO_2$ from 0.1 to 3 and
$H_2O$ : $SiO_2$ from 5 to 100

are sprayed with one another in a ratio by weight corresponding to the overal composition in terms of the molar ratios of from

2.5 to 10 $Na_2O$ : 1 $Al_2O_3$ : 2.5 to 10 $SiO_2$ : 80 to 400 $H_2O$

and crystallisation takes place over a period of at least one hour at a temperature in the range from 85 to 105°C.

8. A process as claimed in Claim 7, characterised in that the two solutions to be sprayed and, optionally, the compressed gas are heated to such an extent that temperatures in the range from 60 to 95°C prevail in the spray stream.

9. A process as claimed in Claims 1 to 4, characterised in that, to produce a crystalline sodium aluminium silicate of the cubic P type having an average particle size of less than 6 µm, an aluminate solution having a composition corresponding to the following molar ratios

1 $Al_2O_3$ : 1 to 5 $Na_2O$ : 20 to 200 $H_2O$

and a silicate solution having a composition corresponding to the following molar ratios

$Na_2O$ : $SiO_2$ from 0.1 to 3 and
$H_2O$ : $SiO_2$ from 5 to 100

are sprayed with one another in a ratio by weight corresponding to the overall composition in terms of the molar ratios of from

1.5 to 10 $Na_2O$ : 1 $Al_2O_3$ : 3 to 10 $SiO_2$ : 100 to 400 $H_2O$

and crystallisation takes place over a period of at least one hour at a temperature in the range from 90 to 105°C.

10. A process as claimed in Claim 9, characterised in that the two solutions to be sprayed and, optionally, the compressed gas are heated to such an extent that temperatures in the range from 60 to 100°C prevail in the spray stream.

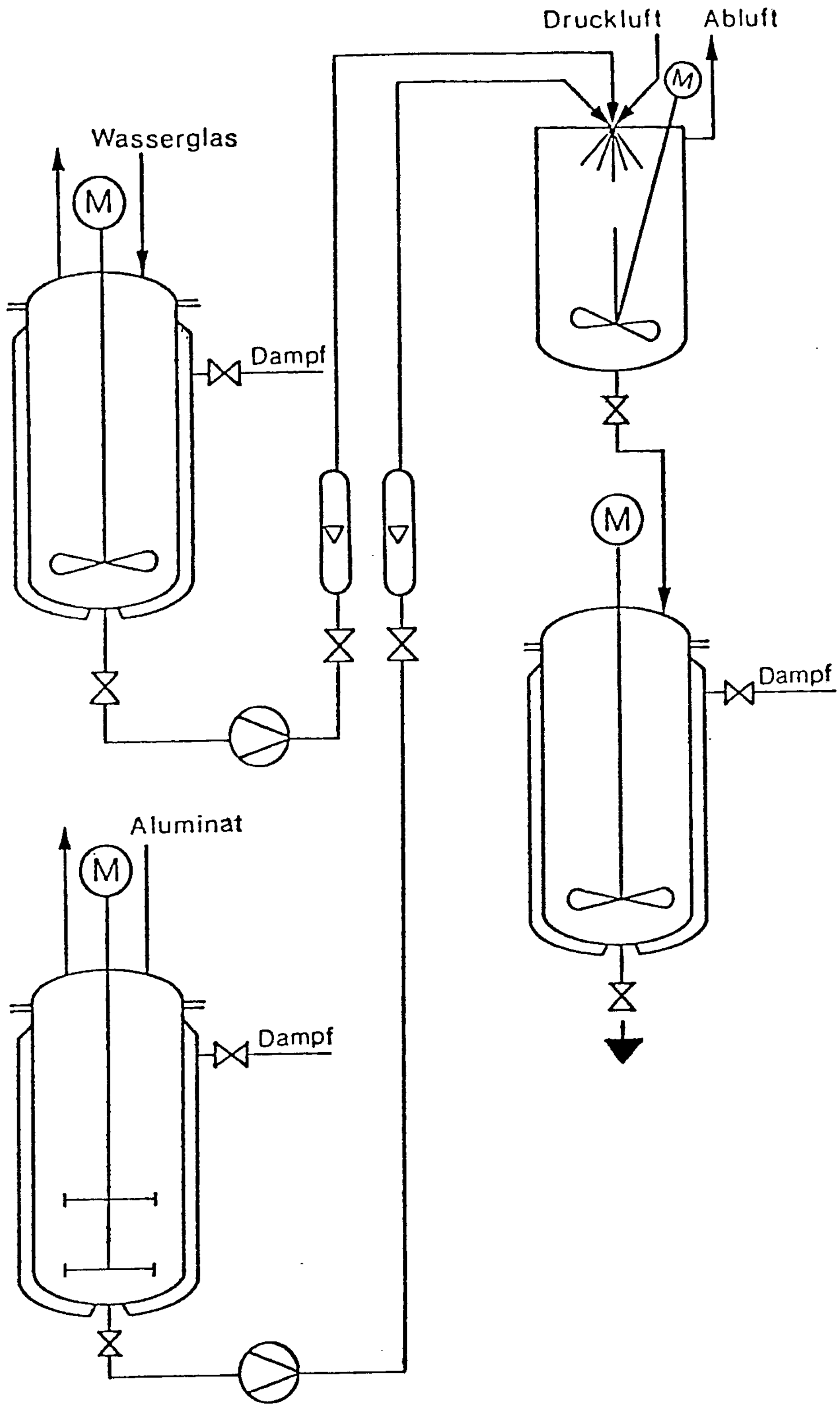


Abbildung 1

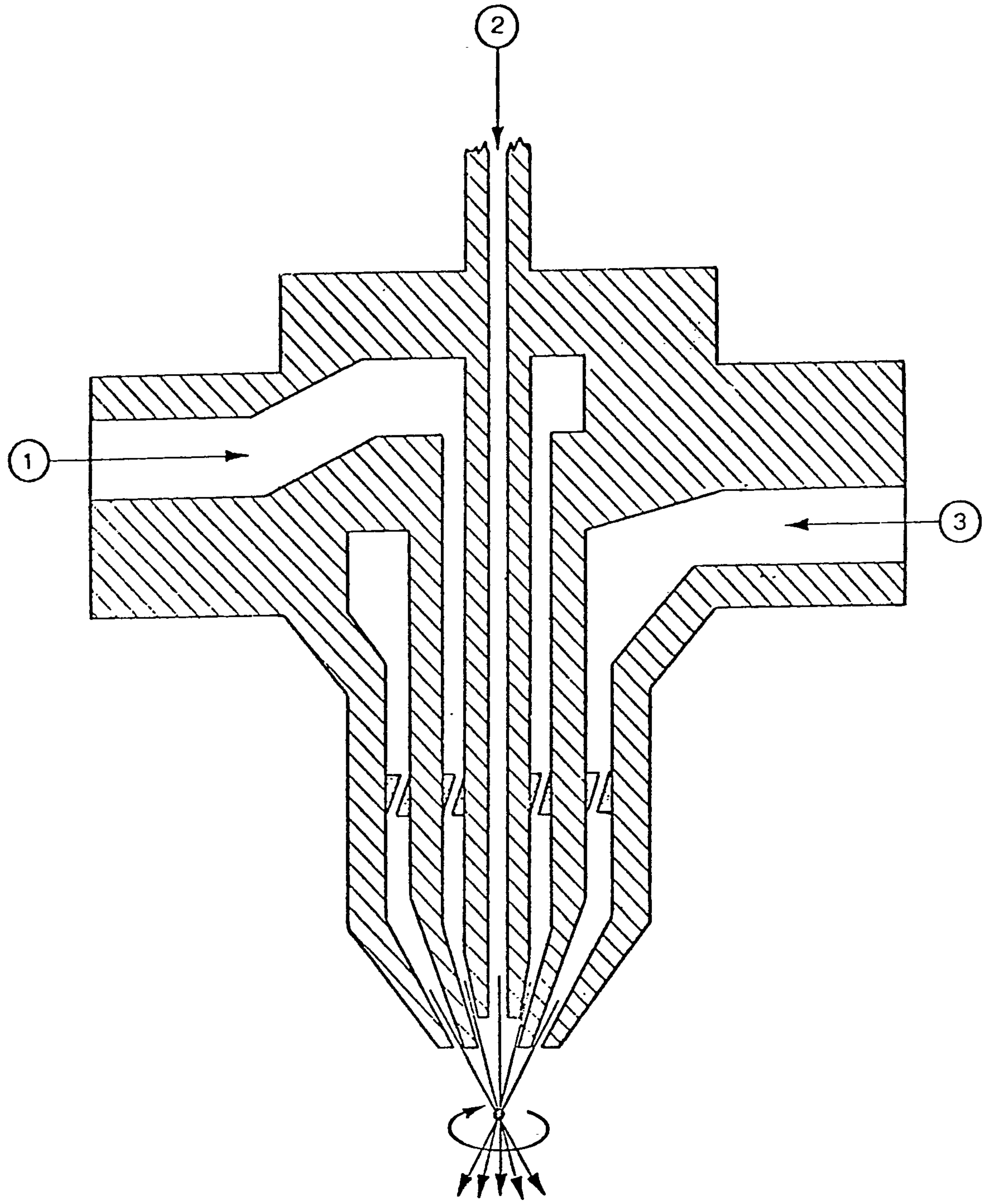


Abbildung 2

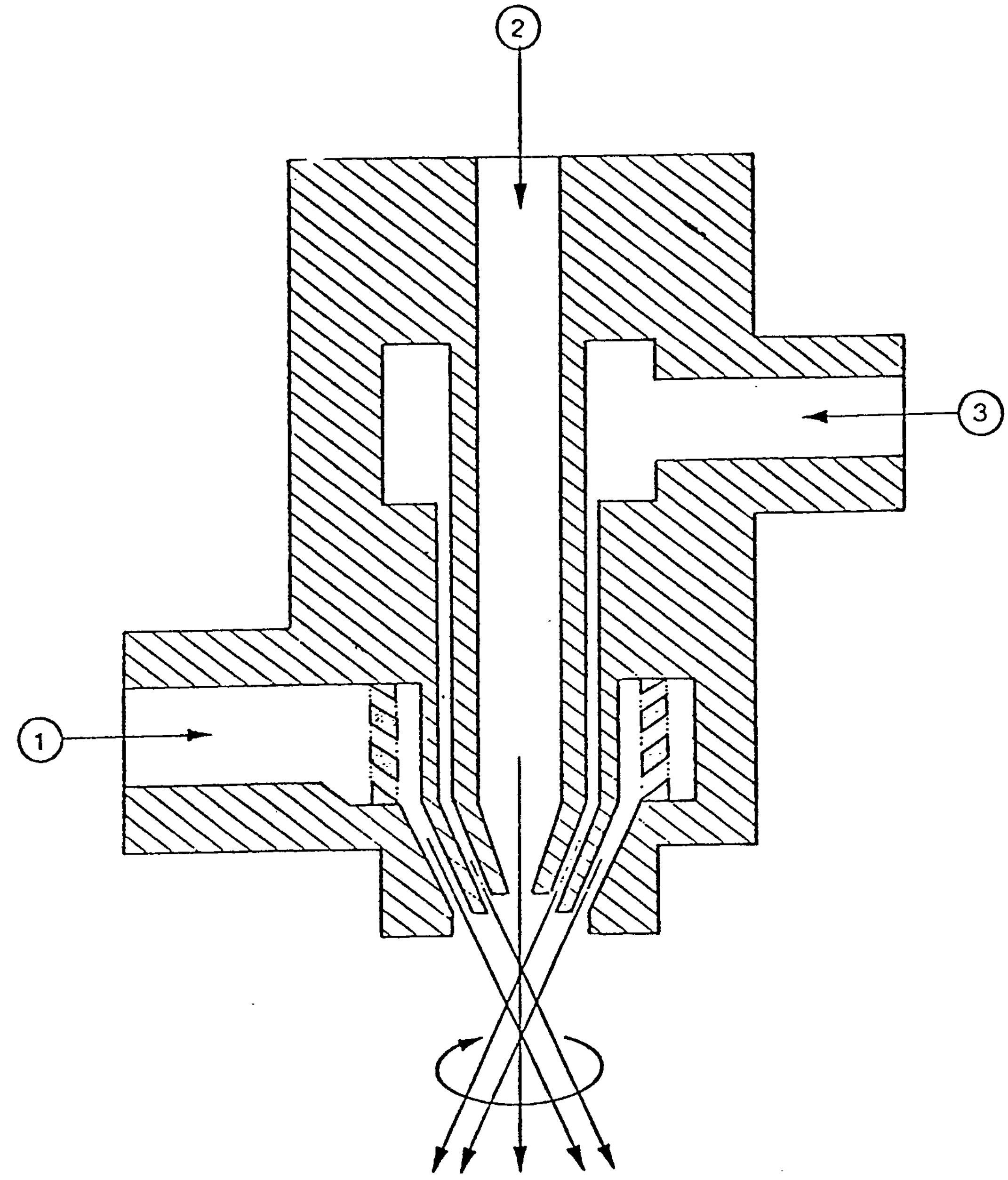


Abbildung 3